# EUROPEAN PATENT APPLICATION

(11) **EP 4 836 573 A1**
(43) Date of publication of application: **04.11.2026**
(21) Application number: 24913531.0
(22) Date of filing: 24.12.2024
(51) Int. Cl.: H04W 74/04, H04W 74/0816, H04W 74/00, H04W 8/22, H04W 76/15, H04W 84/12

(54) **EXCHANGE OF INFORMATION FOR ACCESSING NON-PRIMARY CHANNEL**

(30) Priority: 26.12.2023 KR 20230191184; 03.01.2024 US 202463617375 P; 17.10.2024 KR 20240142372
(71) Applicant: LG Electronics Inc., Yeongdeungpo-gu Seoul 07336 (KR)
(72) Inventor: CHA, Dongju, Seoul 06772 (KR); CHOI, Jinsoo, Seoul 06772 (KR); LEE, Hongwon, Seoul 06772 (KR); JANG, Insun, Seoul 06772 (KR); BAEK, Sunhee, Seoul 06772 (KR); KIM, Geonhwan, Seoul 06772 (KR); YOON, Yelin, Seoul 06772 (KR)
(74) Representative: Frenkel, Matthias Alexander
(86) International application number: PCT/KR2024/021010
(87) International publication number: WO 2025/143740

(57) **Abstract**

The technical features of the present disclosure may relate to a method or a device performed in a wireless local area network (WLAN) system. For example, the present disclosure may propose a specific technique in which an MLD having the capability of non-primary channel access (NPCA) enables or disables an NPCA mode in consideration of power saving, QoS requirements, and the like. For example, proposed is an example in which signaling information on a mode may be configured on the basis of one link, and information on the NPCA mode for one link may also be transferred through another link on the basis of MLD-level. For example, the information on the NPCA mode may be exchanged between stations (STAs) through a management frame.

## Description

### TECHNICAL FIELD

The present specification relates to a wireless local area network (WLAN) system, and more specifically, relates to an improved method and apparatus for accessing a channel other than a primary channel of a wireless LAN system.

### BACKGROUND ART

A wireless LAN or wireless local area network (WLAN) has been improved in various ways. For example, an EHT (Extreme high throughput) specification may use newly proposed increased bandwidth, an improved PPDU (PHY layer protocol data unit) structure, an improved sequence, a HARQ (Hybrid automatic repeat request) technique, and the like. The EHT specification may be referred to as the IEEE 802.11be specification.

In order to support high throughput and high data rates, the EHT specification may use wide bandwidth (e.g., 160/320 MHz), 16 streams, and/or multi-link (or multi-band) operation, and the like.

In the EHT specification, wide bandwidth (e.g., 160/240/320 MHz) may be used for high throughput. In addition, preamble puncturing and multiple RU transmission may be used to efficiently use bandwidth.

A WLAN system may be further improved through a UHR (Ultra High Reliability) specification. The UHR system may be referred to as the IEEE 802.11bn specification. The UHR system aims to support ultra-high reliability in signal transmission to a STA. For this, various technologies are being considered for the UHR system to support high throughput, low latency, and extended range.

A WLAN system performs medium access based on a primary channel. For example, information related to a primary channel having a 20 MHz bandwidth is delivered to several STAs through a management frame, and a STA attempting frame exchange may perform access to the primary channel.

### SPECIFICATION

### TECHNICAL PROBLEM

A current 802.11 BSS Operating Channel may be configured based on a Primary Channel (PCH) and one or more Secondary Channels (SCH). In order to transmit a frame based on the BSS operating channel, a Back-off must always be performed on the PCH, and a Back-off counter (BC) on the PCH must be 0. Accordingly, in a situation where the PCH is determined to be BUSY, a wireless channel/medium cannot be used. However, according to the conventional art, even when only the PCH is in a BUSY state and an SCH (or a non-primary channel) other than the PCH is in an IDLE state, the corresponding SCH cannot be used, and thus medium efficiency may be considerably reduced. In order to solve this problem, various information must be exchanged in order to support an operation of accessing an SCH (or a non-primary channel).

### TECHNICAL SOLUTION

The present specification proposes various technical features. The various technical features of the present specification may be applied to various types of STAs/devices.

For example, the present specification may propose a specific technique whereby an MLD having a capability of NPCA (Non-Primary Channel Access) enables or disables an NPCA mode in consideration of power saving, a QoS requirement, and the like. For example, an example may be proposed in which signaling information related to the mode may be configured based on one link, and information related to an NPCA mode for another link may also be delivered through any one link based on an MLD-level.

For example, the technical feature of the present specification may relate to a method or apparatus performed in a wireless local area network (WLAN) system. For example, the method of the present specification may include transmitting, by a first STA (Station), a first management frame to a second STA based on a first link. For example, the first STA may be affiliated with a first MLD (Multi-Link Device) performing a multi-link operation related to a plurality of links, and the second STA may be affiliated with a second MLD performing a multi-link operation related to the plurality of links. For example, the first management frame may include first bitmap information related to an NPCA (Non-Primary Channel Access) mode performed by the first MLD for the plurality of links.

For example, the method of the present specification may include receiving, by the first STA, a second management frame from the second STA based on the first link. For example, the second management frame may include second bitmap information related to an NPCA mode performed by the second MLD for the plurality of links.

### ADVANTAGEOUS EFFECTS

The technical features described in the present specification can generate various advantageous effects. For example, when information related to an NPCA Mode is exchanged according to the technique proposed in the present specification, efficient and flexible communication corresponding to various types of traffic is possible. For example, when the amount of traffic is large, the NPCA Mode can be enabled, and through this, NPCA can be performed to receive OBSS traffic, thereby improving performance in terms of throughput. For example, when the traffic to be processed by the STAs is not large, the NPCA Mode can be disabled. Through this, upon receiving OBSS traffic, a gain in terms of power saving during the corresponding period can be obtained, thereby providing flexibility for the NPCA mode of an MLD STA.

### BRIEF DESCRIPTION OF THE DRAWINGS

Figure 1 illustrates an example of a transmitting device and/or receiving device of the present specification.
Figure 2 is a conceptual diagram illustrating a structure of a wireless LAN (WLAN).
Figure 3 is a diagram illustrating a general link setup process.
Figure 4 illustrates an embodiment of a multi-link (ML).
Figure 5 illustrates a PPDU transmitted/received at a STA of the present specification.
Figure 6 is a diagram illustrating an arrangement of resource units (RUs) used for a 20 MHz PPDU.
Figure 7 is a diagram illustrating an arrangement of resource units (RUs) used for a 40 MHz PPDU.
Figure 8 is a diagram illustrating an arrangement of resource units (RUs) used for an 80 MHz PPDU.
Figure 9 illustrates an operation according to UL-MU.
Figure 10 illustrates an example of a channel used/supported/defined within a 2.4 GHz band.
Figure 11 illustrates an example of a channel used/supported/defined within a 5 GHz band.
Figure 12 illustrates an example of a channel used/supported/defined within a 6 GHz band.
Figure 13 illustrates an example of a header of a MAC frame.
Figure 14 illustrates a modified example of a transmitting device and/or receiving device of the present specification.
Figure 15 illustrates an example of NAV (network allocation vector) setting.
Figure 16 illustrates an example related to a primary channel, a secondary channel, and channel extension/bonding.
Figure 17 relates to an example of channel access related to an 80 MHz channel.
Figure 18 illustrates an example of an SCA process.
Figure 19 illustrates an example related to a first method of the present specification.
Figure 20 illustrates an example related to a first method of the present specification.
Figure 21 illustrates an example related to a second method of the present specification.
Figure 22 illustrates an example related to a second method of the present specification.
Figure 23 illustrates an example related to a second method of the present specification.
Figure 24 illustrates an example related to a third method of the present specification.
Figure 25 illustrates an example related to a third method of the present specification.
Figure 26 is a procedure flowchart illustrating the above-described example of the present specification.
Figure 27 is another procedure flowchart illustrating the above-described example of the present specification.
Figure 28 is another procedure flowchart illustrating the above-described example of the present specification.
Figure 29 is another procedure flowchart illustrating the above-described example of the present specification.

### DESCRIPTION OF EXEMPLARY EMBODIMENTS

As used herein, "A or B" can mean "only A," "only B," or "both A and B." Alternatively, "A or B" can be interpreted as "A and/or B." For example, as used herein, "A, B or C" can mean "only A," "only B," "only C," or "any combination of A, B, and C."

As used herein, a slash (/) or a comma can mean "and/or." For example, "A/B" can mean "A and/or B." Accordingly, "A/B" can mean "only A," "only B," or "both A and B." For example, "A, B, C" may mean "A, B, or C."

In the present specification, "at least one of A and B" may mean "only A," "only B," or "both A and B." Furthermore, in the present specification, the expressions "at least one of A or B" or "at least one of A and/or B" may be interpreted identically to "at least one of A and B."

Furthermore, parentheses used herein may mean "for example." Specifically, when "control information (UHR-Signal field)" is indicated, the "UHR-Signal field" may be suggested as an example of "control information." In other words, the "control information" in the present specification is not limited to the "UHR-Signal field," and the "UHR-Signal field" may be proposed as an example of "control information." Furthermore, even when "control information (UHR-Signal field)" is indicated, the "UHR-Signal field" may be proposed as an example of "control information."

Furthermore, "a/an" as used herein may mean "at least one" or "one or more." Furthermore, terms ending in "(s)" may mean "at least one" or "one or more."

Furthermore, the expressions "based on," "on the basis of," or "according to" used in the present specification mean "based at least in part on," and do not mean "based solely on" a single element one.

Technical features individually described in a single drawing in the present specification may be implemented individually or simultaneously.

The following examples of the present specification may be applied to various wireless communication systems. For example, the following examples of the present specification may be applied to wireless local area network (WLAN) systems. For example, the present specification may be applied to the IEEE 802.11a/g/n/ac/ax/be/bn standards. Furthermore, the examples of the present specification may also be applied to the Ultra High Reliability (UHR) standard or next-generation WLAN standards that enhance IEEE 802.11bn. Additionally, examples of the present specification may be applied to mobile communication systems. For example, it may be applied to mobile communication systems based on Long Term Evolution (LTE) and its evolutions based on the 3rd Generation Partnership Project (3GPP) standards.

Hereinafter, to explain the technical features of the present specification, technical features to which the present specification can be applied will be described.

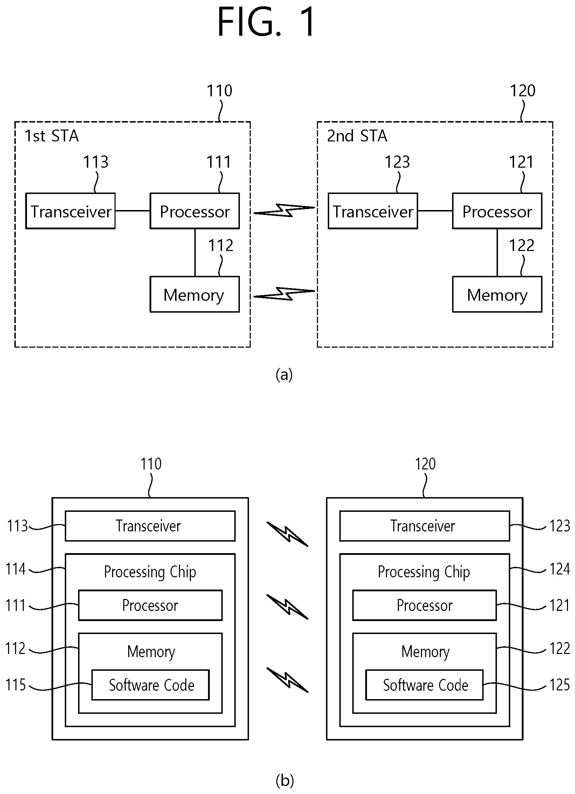

Figure 1 illustrates an example of a transmitting device and/or receiving device of the present specification.

The example of Figure 1 can perform various technical features described below. Figure 1 relates to at least one STA (station). For example, the STAs (110, 120) of the present specification may also be referred to by various names, such as a mobile terminal, a wireless device, a wireless transmit/receive unit (WTRU), a user equipment (UE), a mobile station (MS), a mobile subscriber unit (MS), or simply a user. The STAs (110, 120) of the present specification may also be referred to by various names, such as a network, a base station, a Node-B, an access point (AP), a repeater, a router, or a relay. The STAs (110, 120) of the present specification may be referred to by various names, such as a receiving apparatus, a transmitting apparatus, a receiving STA, a transmitting STA, a receiving device, or a transmitting device.

For example, the STAs (110, 120) of the present specification may function as an access point (AP) or a non-AP. That is, the STAs (110, 120) of the present specification may perform the functions of an AP and/or a non-AP STA. In the present specification, an AP may also be referred to as an AP STA.

The STAs (110, 120) of the present specification may support various communication standards other than the IEEE 802.11 standard. For example, they may support communication standards based on the 3GPP standard (e.g., LTE, LTE-A, 5G NR standards). Furthermore, the STAs of the present specification may be implemented in various devices, such as mobile phones, vehicles, and personal computers. Additionally, the STA of the present specification can support communication for various communication services, such as voice calls, video calls, data communications, and autonomous driving (self-driving).

In the present specification, the STAs (110, 120) may include a medium access control (MAC) and a physical layer interface for wireless media that conforms to the IEEE 802.11 standard.

The STAs (110, 120) are described below based on sub-drawing (a) of FIG. 1.

The first STA (110) may include a processor (111), memory (112), and a transceiver (113). The illustrated processor, memory, and transceiver may be implemented as separate chips, or at least two blocks/functions may be implemented on a single chip.

The transceiver (113) of the first STA performs signal transmission and reception operations. Specifically, it can transmit and receive IEEE 802.11 packets (e.g., IEEE 802.11a/b/g/n/ac/ax/be, etc.).

For example, the first STA (110) can perform the intended operation of an AP. For example, the processor (111) of the AP can receive a signal via the transceiver (113), process the received signal, generate a transmission signal, and perform control for signal transmission. The memory (112) of the AP can store a signal received via the transceiver (113) (e.g., a received signal) and a signal to be transmitted via the transceiver (e.g., a transmitted signal).

For example, the second STA (120) can perform the intended operation of a non-AP STA. For example, the transceiver (123) of the non-AP can perform signal transmission and reception operations. Specifically, it can transmit and receive IEEE 802.11 packets (e.g., IEEE 802.11a/b/g/n/ac/ax/be, etc.).

For example, the processor (121) of the non-AP STA can receive signals via the transceiver (123), process the received signals, generate transmission signals, and perform control for signal transmission. The memory (122) of the non-AP STA can store signals received via the transceiver (123) (e.g., received signals) and signals to be transmitted via the transceiver (e.g., transmitted signals).

For example, the operations of a device designated as an AP in the following specification can be performed by the first STA (110) or the second STA (120). For example, if the first STA (110) is an AP, the operation of the device indicated as the AP is controlled by the processor (111) of the first STA (110), and a related signal may be transmitted or received through the transceiver (113) controlled by the processor (111) of the first STA (110). In addition, control information related to the operation of the AP or the transmission/reception signal of the AP may be stored in the memory (112) of the first STA (110). In addition, if the second STA (110) is an AP, the operation of the device indicated as the AP is controlled by the processor (121) of the second STA (120), and a related signal may be transmitted or received through the transceiver (123) controlled by the processor (121) of the second STA (120). In addition, control information related to the operation of the AP or the transmission/reception signals of the AP may be stored in the memory (122) of the second STA (110).

For example, the operation of a device indicated as a non-AP (or User-STA) in the following specification may be performed in the first STA (110) or the second STA (120). For example, if the second STA (120) is a non-AP, the operation of the device indicated as a non-AP may be controlled by the processor (121) of the second STA (120), and related signals may be transmitted or received through the transceiver (123) controlled by the processor (121) of the second STA (120). In addition, control information related to the operation of the non-AP or the transmission/reception signals of the AP may be stored in the memory (122) of the second STA (120). For example, if the first STA (110) is a non-AP, the operation of a device designated as a non-AP is controlled by the processor (111) of the first STA (110), and related signals may be transmitted or received through a transceiver (113) controlled by the processor (111) of the first STA (120). Furthermore, control information related to the operation of the non-AP or the transmission/reception signals of the AP may be stored in the memory (112) of the first STA (110).

In the following specifications, (transmitting/receiving) STA, first STA, second STA, STA1, STA2, AP, first AP, second AP, AP1, AP2, (transmitting/receiving) Terminal, (transmitting/receiving) device, (transmitting/receiving) apparatus, network, etc., may refer to the STA (110, 120) in Figure 1. For example, devices indicated without specific drawing symbols as (transmitting/receiving) STA, First STA, Second STA, STA1, STA2, AP, First AP, Second AP, AP1, AP2, (transmit/receive) terminal, (transmit/receive) device, (transmit/receive) apparatus, network, etc., may also refer to the STA (110, 120) in Figure 1. For example, in the following example, the operation of various STAs transmitting and receiving signals (e.g., PPDU) may be performed by the transceivers (113, 123) in Figure 1. Additionally, in the following example, the actions of various STAs generating transmission/reception signals or performing data processing or calculations in advance for transmission/reception signals may be performed by the processor (111, 121) in Figure 1. For example, an example of the operation of generating transmission/reception signals or performing data processing or calculations in advance for transmission/reception signals is: 1) determining/obtaining/configuring/calculating/decoding/encoding the bit information of the subfields (SIG, STF, LTF, Data) included in the PPDU; 2) determining/configuring/acquiring time resources or frequency resources (e.g., subcarrier resources) used for the subfields (SIG, STF, LTF, Data) included in the PPDU; 3) determining/configuring/acquiring specific sequences (e.g., pilot sequences, STF/LTF sequences, extra sequences applied to SIG) used for the subfields (SIG, STF, LTF, Data) included in the PPDU; 4) power control actions and/or power saving actions applied to STA, 5) actions related to determining/obtaining/configuring/calculating/decoding/encoding ACK signals. Additionally, in the following example, various information (e.g., information related to fields/subfields/control fields/parameters/power, etc.) used by various STAs for determining/acquiring/configuring/calculating/decoding/encoding transmission/reception signals may be stored in the memory (112, 122) shown in Figure 1.

The device/STA of sub-drawing (a) of FIG. 1 described above can be modified as shown in sub-drawing (b) of FIG. 1. The STAs (110, 120) of the present specification will now be described based on sub-drawing (b) of FIG. 1.

For example, the transceivers (113, 123) illustrated in sub-drawing (b) of FIG. 1 can perform the same functions as the transceivers illustrated in sub-drawing (a) of FIG. 1 described above. For example, the processing chip (114, 124) illustrated in sub-drawing (b) of FIG. 1 may include a processor (111, 121) and a memory (112, 122). The processor (111, 121) and the memory (112, 122) illustrated in sub-drawing (b) of FIG. 1 may perform the same functions as the processor (111, 121) and the memory (112, 122) illustrated in sub-drawing (a) of FIG. 1 described above.

The mobile terminal, wireless device, Wireless Transmit/Receive Unit (WTRU), User Equipment (UE), Mobile Station (MS), Mobile Subscriber Unit, user, user STA, network, Base Station, Node-B, Access Point (AP), repeater, router, relay, receiving device, transmitting device, receiving STA, transmitting STA, receiving Device, transmitting Device, receiving Apparatus, and/or transmitting Apparatus described below may refer to the STA (110, 120) illustrated in the sub-drawings (a)/(b) of FIG. 1, or may refer to the processing chip (114, 124) illustrated in the sub-drawing (b) of FIG. 1. That is, the technical feature of the present specification may be performed in the STA (110, 120) illustrated in the sub-drawings (a)/(b) of FIG. 1, or may be performed only in the processing chip (114, 124) illustrated in the sub-drawings (b) of FIG. 1. For example, the technical feature that the transmitting STA transmits a control signal may be understood as a technical feature that the control signal generated in the processor (111, 121) illustrated in the sub-drawings (a)/(b) of FIG. 1 is transmitted through the transceiver (113, 123) illustrated in the sub-drawings (a)/(b) of FIG. 1. Alternatively, the technical feature that the transmitting STA transmits a control signal may be understood as a technical feature that the control signal to be transmitted to the transceiver (113, 123) is generated in the processing chip (114, 124) illustrated in the sub-drawings (b) of FIG. 1.

For example, the technical feature of a receiving STA receiving a control signal can be understood as a technical feature of a control signal being received by a transceiver (113, 123) illustrated in sub-drawing (a) of FIG. 1. Alternatively, the technical feature of a receiving STA receiving a control signal can be understood as a technical feature of a control signal received by a transceiver (113, 123) illustrated in sub-drawing (a) of FIG. 1 being acquired by a processor (111, 121) illustrated in sub-drawing (a) of FIG. 1. Alternatively, the technical feature of a receiving STA receiving a control signal can be understood as a technical feature of a control signal received by a transceiver (113, 123) illustrated in sub-drawing (b) of FIG. 1 being acquired by a processing chip (114, 124) illustrated in sub-drawing (b) of FIG. 1.

Referring to sub-drawing (b) of FIG. 1, software code (115, 125) may be included in the memory (112, 122). The software code (115, 125) may include instructions that control the operation of the processor (111, 121). The software code (115, 125) may be included in various programming languages.

The processor (111, 121) or processing chip (114, 124) illustrated in FIG. 1 may include an application-specific integrated circuit (ASIC), another chipset, logic circuit, and/or data processing device. The processor may be an application processor (AP). For example, the processor (111, 121) or processing chip (114, 124) illustrated in FIG. 1 may include at least one of a digital signal processor (DSP), a central processing unit (CPU), a graphics processing unit (GPU), and a modem (modulator and demodulator). For example, the processors (111, 121) or processing chips (114, 124) illustrated in FIG. 1 may be a SNAPDRAGON^{®} series processor manufactured by Qualcomm^{®}, an EXYNOS^{®} series processor manufactured by Samsung^{®}, an A series processor manufactured by Apple^{®}, a HELIO^{®} series processor manufactured by MediaTek^{®}, an ATOM^{®} series processor manufactured by INTEL^{®}, or an enhanced processor thereof.

In the present specification, "uplink" may refer to a link for communication from a non-AP STA to an AP STA, and uplink PPDUs/packets/signals, etc. may be transmitted via the uplink. Furthermore, in the present specification, "downlink" may refer to a link for communication from an AP STA to a non-AP STA, and downlink PPDUs/packets/signals, etc. may be transmitted via the downlink.

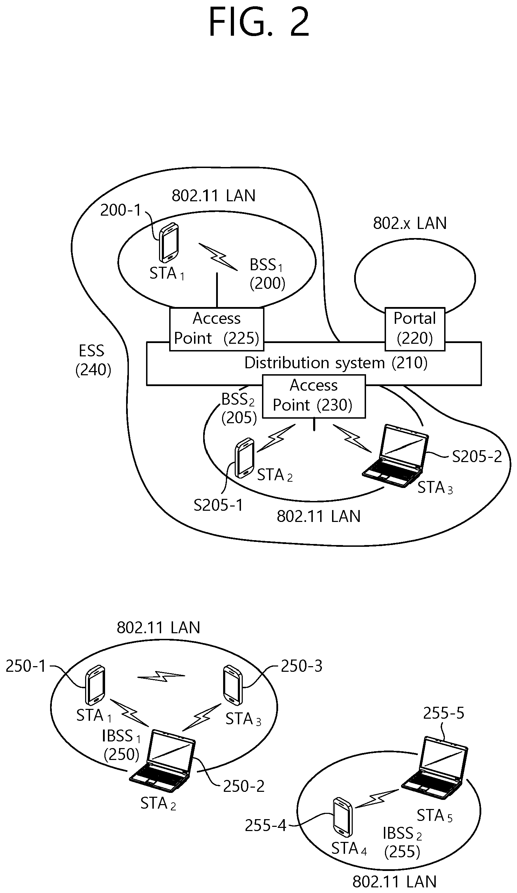

Figure 2 is a conceptual diagram illustrating the structure of a wireless local area network (WLAN).

The top of Figure 2 illustrates the structure of an infrastructure BSS (basic service set) of the Institute of Electrical and Electronic Engineers (IEEE) 802.11 standard.

Referring to the top of Figure 2, the wireless LAN system may include one or more infrastructure BSSs (200, 205) (hereinafter referred to as BSS). A BSS (200, 205) is a set of APs (access points, 225) and STAs (stations, 200-1) that have successfully synchronized and can communicate with each other; it does not refer to a specific area. A BSS (205) may include one or more connectable STAs (205-1, 205-2) connected to a single AP (230).

A BSS may include at least one STA, an AP (225, 230) that provides a distribution service, and a distribution system (DS, 210) that connects multiple APs.

A distributed system (210) can connect multiple BSSs (200, 205) to implement an extended service set (ESS) 240. An ESS (240) can be used as a term to indicate a network formed by connecting one or more APs through the distributed system (210). APs included in a single ESS (240) can have the same SSID (service set identifier).

A portal (220) can serve as a bridge, connecting a wireless LAN network (IEEE 802.11) to another network (e.g., 802.X).

In a BSS, such as the upper portion of FIG. 2, a network between APs (225, 230) and a network between APs (225, 230) and STAs (200-1, 205-1, 205-2) can be implemented. However, it may also be possible to establish a network and perform communication between STAs without an AP (225, 230). A network that establishes a network and performs communication between STAs without an AP (225, 230) is defined as an ad-hoc network or an independent basic service set (IBSS).

The bottom of Figure 2 is a conceptual diagram illustrating an IBSS.

Referring to the bottom of Figure 2, an IBSS is a BSS that operates in ad-hoc mode. Since an IBSS does not include an AP, there is no centralized management entity. That is, in the IBSS, STAs (250-1, 250-2, 250-3, 255-4, 255-5) are managed in a distributed manner. In IBSS, all STAs (250-1, 250-2, 250-3, 255-4, 255-5) can be mobile STAs, and access to distributed systems is not permitted, forming a self-contained network.

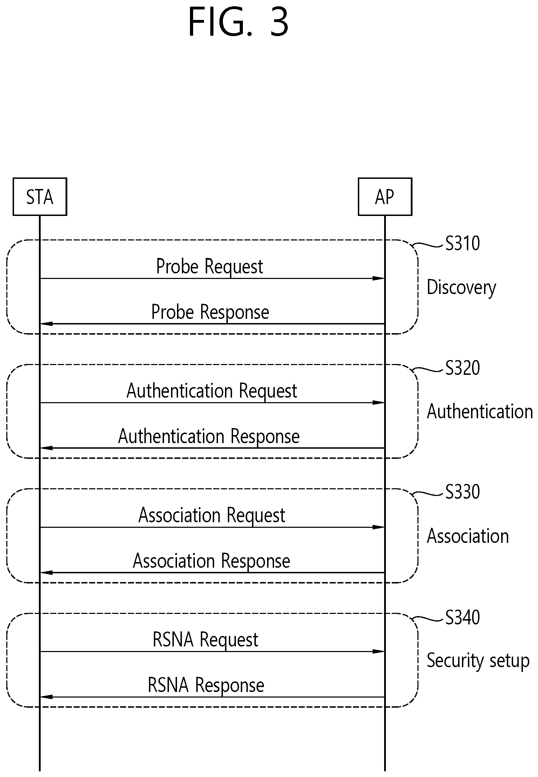

Figure 3 is a diagram illustrating a typical link setup process.

In the illustrated step S310, a STA may perform a network discovery operation. This network discovery operation may include scanning. That is, for a STA to access a network, it must find a network it can join. Before joining a wireless network, a STA must identify compatible networks. The process of identifying networks in a specific area is called scanning. Scanning methods include active scanning and passive scanning.

Figure 3 illustrates a network discovery operation that includes an active scanning process as an example. In active scanning, a STA performing scanning transmits a probe request frame to discover nearby APs while moving through channels and awaits a response. The responder transmits a probe response frame to the STA that transmitted the probe request frame in response to the probe request frame. Here, the responder may be the STA that last transmitted a beacon frame in the BSS of the channel being scanned. In a BSS, the AP transmits the beacon frame, making it the responder. In an IBSS, STAs within the IBSS take turns transmitting beacon frames, so the responder is not fixed. For example, a STA that transmits a probe request frame on channel 1 and receives a probe response frame on channel 1 may store the BSS-related information contained in the received probe response frame and move to the next channel (e.g., channel 2) to perform scanning in the same manner (e.g., transmitting and receiving probe requests and responses on channel 2).

Although not shown in the example of Figure 3, the scanning operation can also be performed passively. A STA performing scanning based on passive scanning may wait for a beacon frame while moving between channels. A beacon frame, a management frame in IEEE 802.11, announces the presence of a wireless network and is periodically transmitted to scanning STAs to discover and join the network. In the BSS, the AP periodically transmits beacon frames, while in the IBSS, STAs within the IBSS take turns transmitting beacon frames. When a scanning STA receives a beacon frame, it stores the BSS information contained in the beacon frame and moves to a different channel, recording the beacon frame information on each channel. Upon receiving a beacon frame, the STA stores the BSS-related information contained in the received beacon frame and moves to the next channel, performing scanning on the next channel using the same method.

A STA that discovers a network can perform an authentication process in step S320. This authentication process can be referred to as the first authentication process to clearly distinguish it from the security setup operation of step S340, described below. The authentication process of S320 may include a process in which the STA transmits an authentication request frame to the AP, and the AP transmits an authentication response frame to the STA in response. The authentication frame used for the authentication request/response corresponds to a management frame.

The authentication frame may include information such as an authentication algorithm number, an authentication transaction sequence number, a status code, a challenge text, a Robust Security Network (RSN), and a Finite Cyclic Group (FCG).

The STA may transmit the authentication request frame to the AP. The AP may determine whether to grant authentication to the STA based on the information contained in the received authentication request frame. The AP may provide the STA with the result of the authentication process via an authentication response frame.

A successfully authenticated STA may perform the connection process based on step S330. The association process involves the STA sending an association request frame to the AP, and the AP responding by sending an association response frame to the STA. For example, the association request frame may include information related to various capabilities, such as a beacon listen interval, a service set identifier (SSID), supported rates, supported channels, RSN, mobility domain, supported operating classes, a Traffic Indication Map Broadcast request, and interworking service capabilities. For example, the association response frame may include information related to various capabilities, status codes, Association ID (AID), supported rates, Enhanced Distributed Channel Access (EDCA) parameter sets, Received Channel Power Indicator (RCPI), Received Signal to Noise Indicator (RSNI), mobility domains, timeout intervals (association comeback times), overlapping BSS scan parameters, TIM broadcast responses, QoS maps, etc.

Subsequently, in step S340, the STA may perform a security setup process. The security setup process in step S340 may include, for example, a process of setting up a private key through four-way handshaking using an Extensible Authentication Protocol over LAN (EAPOL) frame.

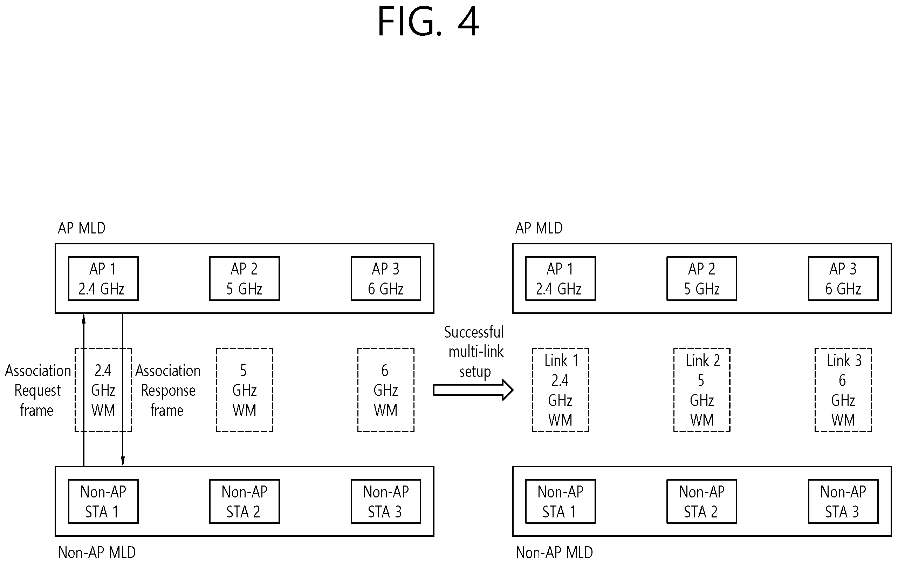

Figure 4 illustrates an embodiment of a multi-link (ML).

As illustrated in Figure 4, multiple multi-link devices (MLDs) can communicate via a multi-link. The MLDs can be categorized into AP MLDs, which include multiple AP STAs, and non-AP MLDs, which include multiple non-AP STAs. Specifically, the AP MLD may include affiliated APs (e.g., AP STAs), and the non-AP MLD may include affiliated STAs (e.g., non-AP STAs, or user-STAs).

The multi-link may include a first link and a second link, and different channels/subchannels/frequency resources may be allocated to the first and second links. The first and second multi-links may be identified using a 4-bit (or other n-bit) link ID. The first and second links may be configured in the same 2.4 GHz, 5 GHz, or 6 GHz band. Alternatively, the first and second links may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link, in which AP1 and non-AP1 operate, may be defined as a channel/subchannel/frequency resource within the 2.4 GHz band. Furthermore, in the example of FIG. 4, the second link, in which AP2 and non-AP2 operate, may be defined as a channel/subchannel/frequency resource within the 5 GHz band. Additionally, in the example of FIG. 4, the third link where AP3 and non-AP3 operate can be defined as a channel/subchannel/frequency resource within the 6 GHz band.

In the example of FIG. 4, AP1 can initiate a multilink setup procedure (ML setup procedure) by transmitting an Association Request frame to non-AP STA1. In the example of FIG. 4, non-AP STA1 can transmit an Association Response frame in response to the Association Request frame. Each AP (e.g., AP1/2/3) depicted in FIG. 4 may be identical to the APs depicted in FIG. 1 and/or FIG. 2, and each non-AP (e.g., non-AP1/2/3) depicted in FIG. 4 may be identical to the STAs (e.g., user STAs or non-AP STAs) depicted in FIG. 1 and/or FIG. 2.

The specific features of the present specification are not limited to the specific features depicted in FIG. 4. That is, the number of links can be defined in various ways, and multiple links can be defined in various ways within at least one band.

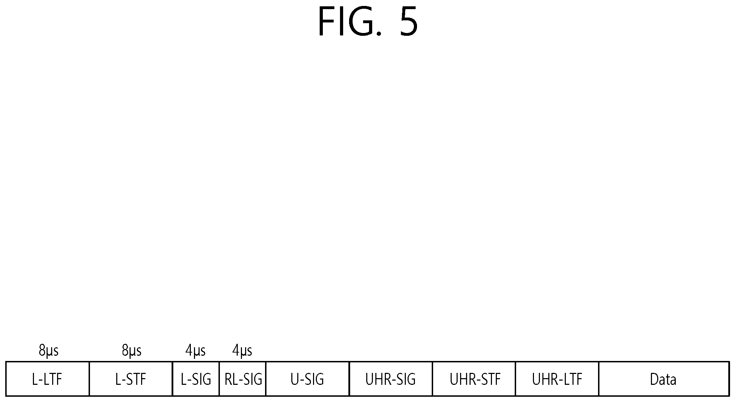

Figure 5 illustrates a PPDU (physical protocol data unit or physical layer (PHY) protocol data unit) transmitted/received by a STA of the present specification.

A STA (e.g., an AP STA, a non-AP STA, an AP MLD, or a non-AP MLD) of the present specification can transmit and/or receive the PPDU of Figure 5. The PPDU described herein may have, for example, the structure of Figure 5. Furthermore, the PPDU described herein, an Ultra High Reliability (UHR) PPDU, may be referred to by various names, such as a transmission PPDU, a reception PPDU, a first type PPDU, or an Nth type PPDU. The PPDU described herein may be used in a WLAN system defined according to IEEE 802.11bn and/or a next-generation WLAN system that enhances IEEE 802.11bn.

The PPDU of Figure 5 may relate to various PPDU types used in a UHR system. For example, the example of FIG. 5 can be used for at least one of single-user (SU) mode/type/transmission, multi-user (MU) mode/type/transmission, and null data packet (NDP) mode/type/transmission related to channel sounding. For example, if the example of FIG. 5 relates to NDP, the illustrated Data field may be omitted. If the PPDU of FIG. 5 is used for Trigger-based (TB) mode, the UHR-SIG of FIG. 5 may be omitted. In other words, a STA that has received a Trigger frame for UL-MU (Uplink-MU) communication may transmit a PPDU with the UHR-SIG omitted in the example of FIG. 5.

In FIG. 5, L-STF or UHR-LTF may be referred to as a preamble or physical preamble, and may be generated/transmitted/received/acquired/decoded in the physical layer (included in the transmitting/receiving STA).

Each block illustrated in FIG. 5 may be referred to as a field/subfield/signal, etc. The names of these fields/subfields/signals may be, as illustrated in FIG. 5, a legacy short training field (L-STF), a legacy long training field (L-LTF), a legacy signal (L-SIG), a repeated L-SIG (RL-SIG), Universal Signal (U-SIG), UHR-signal (UHR-SIG), etc.

The subcarrier spacing of the L-STF, L-LTF, L-SIG, RL-SIG, U-SIG, and UHR-SIG fields in FIG. 5 may be set to 312.5 kHz, and the subcarrier spacing of the UHR-STF, UHR-LTF, and Data fields may be set to 78.125 kHz. That is, the tone indices (or subcarrier indices) of the L-STF, L-LTF, L-SIG, RL-SIG, U-SIG, and UHR-SIG fields may be expressed in units of 312.5 kHz, and the tone indices (or subcarrier indices) of the UHR-STF, UHR-LTF, and Data fields may be expressed in units of 78.125 kHz.

In the PPDU in FIG. 5, L-LTF and L-STF may be identical to conventional fields (e.g., non-HT LTF and non-HT STF defined in conventional WLAN standards).

The L-SIG field of FIG. 5 may include, for example, 24 bits of bit information. For example, the 24 bits of information may include a 4 bit Rate field, a 1 bit Reserved bit, a 12 bit Length field, a 1 bit Parity bit, and a 6 bit Tail bit. For example, the 12 bit Length field may include information about the length or time duration of the PPDU. For example, the value of the 12 bit Length field may be determined based on the type of the PPDU. For example, if the PPDU is a non-HT (non-High Throughput), HT (High Throughput), VHT (Very High Throughput) PPDU, or an EHT (extremely high throughput) PPDU or UHR PPDU, the value of the Length field may be determined as a multiple of 3. For example, if the PPDU is a HE PPDU, the value of the Length field may be determined as "a multiple of 3 + 1" or "a multiple of 3 + 2". In other words, for non-HT, HT, VHT PPDUs, EHT PPDUs, and UHR PPDUs, the Length field value can be determined as a multiple of 3. For HE (High Efficiency) PPDUs, the Length field value can be determined as "a multiple of 3 + 1" or "a multiple of 3 + 2." In other words, the Length field in a UHR PPDU is set to a value satisfying the condition that the remainder is zero when LENGTH is divided by 3.

For example, a (non-AP and AP) STA can apply BCC encoding based on a code rate of 1/2 to the 24-bit information in the L-SIG field. The transmitting STA can then acquire 48 BCC encoding bits. BPSK modulation can be applied to the 48 encoding bits, generating 48 BPSK symbols. The transmitting STA can map 48 BPSK symbols to positions other than the pilot subcarriers {subcarrier indices -21, -7, +7, +21} and the DC subcarrier {subcarrier index 0}. Consequently, the 48 BPSK symbols can be mapped to subcarrier indices -26 to -22, -20 to -8, -6 to -1, +1 to +6, +8 to +20, and +22 to +26. The transmitting STA can additionally map signals {-1, -1, -1, 1} to subcarrier indices {-28, -27, +27, +28}. These signals can be used for channel estimation for the frequency domain corresponding to {-28, -27, +27, +28}.

For example, (non-AP and AP) STAs can generate RL-SIGs that are generated identically to L-SIGs. BPSK modulation can be applied to RL-SIG. The receiving (non-AP and AP) STA can determine whether the received PPDU is a HE PPDU, EHT PPDU, or UHR PPDU based on the presence of RL-SIG. In other words, the receiving (non-AP and AP) STA can determine whether the received PPDU is a HE PPDU, EHT PPDU, or UHR PPDU if RL-SIG is present. In other words, the receiving (non-AP and AP) STA can determine whether the received PPDU is a non-HT PPDU, HT PPDU, or VHT PPDU if RL-SIG is not present. In other words, the RL-SIG field is a repeat of the L-SIG field and is used to differentiate a UHR PPDU from a non-HT PPDU, HT PPDU, and VHT PPDU.

A Universal Signal (U-SIG) may be inserted after the RL-SIG in Figure 5. The U-SIG may be referred to by various names, such as the first SIG field, the first SIG, the first type SIG, the control signal, the control signal field, the first (type) control signal, the common control field, and the common control signal.

The U-SIG may contain N bits of information and may include information for identifying the type of the EHT PPDU. For example, the U-SIG may be composed based on two symbols (e.g., two consecutive/contiguous OFDM symbols). Each symbol for the U-SIG (e.g., the OFDM symbol) may have a duration of 4 µs. Each symbol of the U-SIG may be used to transmit 26 bits of information. For example, each symbol of the U-SIG may be transmitted and received based on 52 data tones and 4 pilot tones.

For example, A bit information (e.g., 52 uncoded bits) can be transmitted through U-SIG, and the first symbol of U-SIG can transmit the first X bits of information (e.g., 26 uncoded bits) out of the total A bit information, and the second symbol of U-SIG can transmit the remaining Y bits of information (e.g., 26 uncoded bits) out of the total A bit information. For example, the transmitting STA can obtain 26 uncoded bits included in each U-SIG symbol. The transmitting STA can perform convolutional encoding (e.g., BCC encoding) based on a rate of R=1/2 to generate 52 coded bits, and perform interleaving on the 52 coded bits. The transmitting STA can perform BPSK modulation on the interleaved 52 BPSK symbols to generate 52 BPSK symbols allocated to each U-SIG symbol. A single U-SIG symbol can be transmitted based on 56 tones (subcarriers) ranging from subcarrier index - 28 to subcarrier index +28, excluding DC index 0. The 52 BPSK symbols generated by the transmitting STA can be transmitted based on the remaining tones (subcarriers) excluding the pilot tones -21, -7, +7, and +21.

For example, the A-bit information (e.g., 52 uncoded bits) transmitted by the U-SIG can include a CRC field (e.g., a 4-bit field) and a tail field (e.g., a 6-bit field). The CRC field and tail field can be transmitted via the second symbol of the U-SIG. The CRC field can be generated based on the 26 bits allocated to the first symbol of the U-SIG and the remaining 16 bits within the second symbol, excluding the CRC/tail field, and can be generated based on a conventional CRC calculation algorithm. Additionally, the tail field can be used to terminate the trellis of the convolutional decoder and can be set to "000000," for example.

The A-bit information (e.g., 52 uncoded bits) transmitted by the U-SIG (or U-SIG field) can be divided into version-independent bits and version-dependent bits. For example, the size of the version-independent bits can be fixed or variable. For example, the version-independent bits can be assigned only to the first symbol of the U-SIG, or the version-independent bits can be assigned to both the first and second symbols of the U-SIG. For example, the version-independent bits and version-dependent bits can be referred to by various names, such as the first control bit and the second control bit.

For example, the version-independent bits of the U-SIG can include a 3-bit PHY version identifier. For example, a 3-bit PHY version identifier may include information related to the PHY version of a transmitted/received PPDU. For example, a first value (e.g., a value of 000) of the 3-bit PHY version identifier may indicate that the transmitted/received PPDU is an EHT PPDU. Additionally, a second value (e.g., a value of 001) of the 3-bit PHY version identifier may indicate that the transmitted/received PPDU is a UHR PPDU.

In other words, when an (AP/non-AP) STA transmits an EHT PPDU, it may set the 3-bit PHY version identifier to the first value. In other words, a receiving (AP/non-AP) STA may determine that the received PPDU is an EHT PPDU based on a PHY version identifier having the first value, and may determine that the received PPDU is a UHR PPDU based on a PHY version identifier having the second value.

For example, the version-independent bits of U-SIG may include a 1-bit UL/DL flag field. The first value of the 1-bit UL/DL flag field relates to UL communication, and the second value of the UL/DL flag field relates to DL communication.

For example, the version-independent bits of the U-SIG may include information about the length of the TXOP and information about the BSS color ID.

For example, if the UHR PPDU is classified into various types (e.g., a type related to SU transmission (performed based on UL or DL), a type related to DL transmission, a type related to NDP transmission, a type related to DL non-MU-MIMO, a type related to DL MU-MIMO, a type related to Multi-AP operation, a type related to CBF (Coordinated beamforming), SR (Spatial Reuse), a type related to C-OFDMA (Coordinated OFDMA), a type related to C-TDMA (Coordinated TDMA)), information about the type of the EHT PPDU (e.g., 2-bit or 3-bit information) may be included in the version-dependent bits of the U-SIG.

For example, U-SIG may include 1) a bandwidth field including information about bandwidth, 2) a field including information about the Modulation and Coding Scheme (MCS) technique applied to UHR-SIG, 3) an indication field including information about whether dual subcarrier modulation (DCM) technique is applied to UHR-SIG, 4) a field including information about the number of symbols used for UHR-SIG, 5) a field including information about whether UHR-SIG is generated across the entire band, 6) a field including information about the type of UHR-LTF/STF, and 7) a field indicating the length of UHR-LTF and the CP length.

Preamble puncturing may be applied to the PPDU of FIG. 5. Preamble puncturing means applying puncturing to a portion of the entire band of the PPDU (e.g., the secondary 20 MHz band). For example, when an 80 MHz PPDU is transmitted, the STA can apply puncturing to the secondary 20 MHz band within the 80 MHz band and transmit the PPDU only through the primary 20 MHz band and the secondary 40 MHz band.

For example, the preamble puncturing pattern can be preset. For example, if the first puncturing pattern is applied, puncturing can be applied only to the secondary 20 MHz band within the 80 MHz band. For example, if the second puncturing pattern is applied, puncturing can be applied only to one of the two secondary 20 MHz bands included in the secondary 40 MHz band within the 80 MHz band. For example, if the third puncturing pattern is applied, puncturing can be applied only to the secondary 20 MHz band included in the primary 80 MHz band within the 160 MHz band (or 80+80 MHz band). For example, when the fourth puncturing pattern is applied, puncturing may be applied to at least one 20 MHz channel not included in the primary 40 MHz band, while the primary 40 MHz band is present within the 160 MHz band (or the 80+80 MHz band).

Information related to preamble puncturing applied to a PPDU may be included in the U-SIG and/or UHR-SIG. For example, the first field of the U-SIG may include information related to the contiguous bandwidth of the PPDU, and the second field of the U-SIG may include information related to preamble puncturing applied to the PPDU.

For example, the U-SIG and UHR-SIG may include information related to preamble puncturing based on the following method. If the bandwidth of the PPDU exceeds 80 MHz, the U-SIG may be configured individually in 80 MHz units. For example, if the bandwidth of a PPDU is 160 MHz, the PPDU may include a first U-SIG for a first 80 MHz band and a second U-SIG for a second 80 MHz band. In this case, a first field of the first U-SIG may include information about the 160 MHz bandwidth, and a second field of the first U-SIG may include information about preamble puncturing applied to the first 80 MHz band (e.g., information about a preamble puncturing pattern). In addition, a first field of the second U-SIG may include information about the 160 MHz bandwidth, and a second field of the second U-SIG may include information about preamble puncturing applied to the second 80 MHz band (e.g., information about a preamble puncturing pattern). Meanwhile, the UHR-SIG contiguous to the first U-SIG may include information about preamble puncturing applied to the second 80 MHz band (e.g., information about a preamble puncturing pattern), and the UHR-SIG contiguous to the second U-SIG may include information about preamble puncturing applied to the first 80 MHz band (e.g., information about a preamble puncturing pattern).

Additionally or alternatively, the U-SIG and UHR-SIG may include information related to preamble puncturing based on the following methods. The U-SIG may include information related to preamble puncturing for all bands (e.g., information related to the preamble puncturing pattern). That is, the UHR-SIG does not include information related to preamble puncturing, and only the U-SIG may include information related to preamble puncturing (e.g., information related to the preamble puncturing pattern).

The U-SIG may be configured in 20 MHz units. For example, if an 80 MHz PPDU is configured, the U-SIG may be duplicated. That is, four identical U-SIGs may be included within the 80 MHz PPDU. PPDUs exceeding the 80 MHz bandwidth may include different U-SIGs.

The UHR-SIG of FIG. 5 may include control information for a receiving STA. The UHR-SIG may be transmitted over at least one symbol, each symbol having a length of 4 µs. Information related to the number of symbols used for the UHR-SIG may be included in the U-SIG.

The UHR-SIG provides additional signals to the U-SIG field to enable the STA to interpret/decode the UHR PPDU. The UHR-SIG field may include U-SIG overflow bits common to all users. The UHR-SIG field also includes resource allocation information, allowing the STA to look up resources used in fields including the data field, UHR-STF, and UHR-LTF (e.g., UHR modulated fields of a UHR PPDU).

The frequency resources of the UHR-LTF, UHR-STF, and data fields illustrated in Figure 5 can be determined based on resource units (RUs) defined by multiple subcarriers/tones. That is, the UHR-LTF, UHR-STF, and data fields of the present specification can be transmitted/received via resource units (RUs) defined by multiple subcarriers/tones.

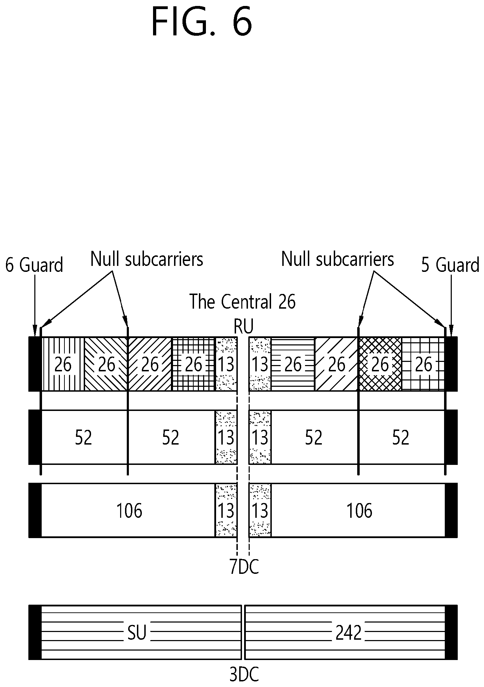

Figure 6 is a diagram illustrating the layout of resource units (RUs) used for a 20MHz PPDU. That is, the UHR-LTF, UHR-STF, and/or data fields included in a 20MHz PPDU can be transmitted/received via at least one of the various RUs defined in Figure 6.

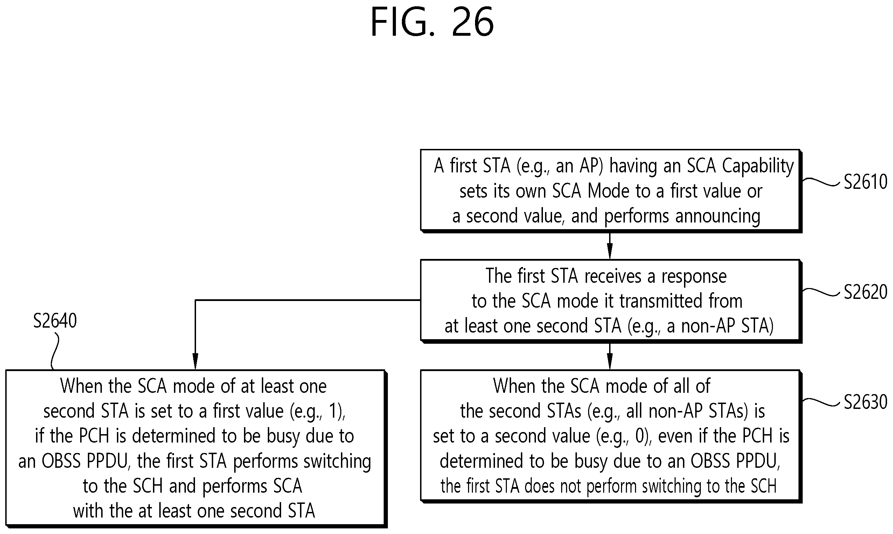

As illustrated at the top of Figure 6, 26 units (e.g., units corresponding to 26 tones) can be arranged. In the leftmost band of the 20 MHz band, six tones can be used as a guard band, and in the rightmost band of the 20 MHz band, five tones can be used as a guard band. Furthermore, seven DC tones can be inserted into the center band (i.e., the DC band), and 26 units, corresponding to 13 tones each, can exist on the left and right sides of the DC band. Furthermore, 26, 52, and 106 units can be allocated to other bands. Each unit can be assigned to a receiving station, i.e., a user.

Meanwhile, the RU arrangement of Figure 6 can be utilized not only for multiple users (MUs) but also for single users (SUs). In this case, as shown at the bottom of Figure 6, a single 242-unit can be used, in which case three DC tones can be inserted.

In the example of Fig. 6, RUs of various sizes, such as 26-RU, 52-RU, 106-RU, and 242-RU, are proposed. Since the specific sizes of these RUs can be expanded or increased, the present embodiment is not limited to the specific sizes of each RU (e.g., the number of corresponding tones). In the present specification, N-RU may be represented as N-tone RU, etc. For example, 26-RU may be represented as 26-tone RU.

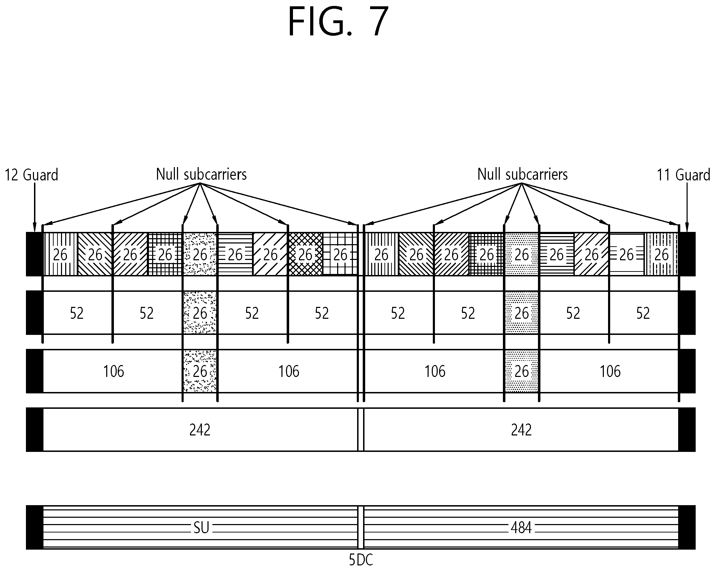

Figure 7 is a diagram illustrating the layout of resource units (RUs) used for a 40MHz PPDU.

Similar to the example in Figure 6, which used RUs of various sizes, the example in Figure 7 can also use RUs of 26, 52, 106, 242, and 484 RUs. Furthermore, five DC tones can be inserted at the center frequency, 12 tones can be used as guard bands in the leftmost band of the 40MHz band, and 11 tones can be used as guard bands in the rightmost band of the 40MHz band.

Also, as illustrated, a 484-RU can be used for a single user. Similarly to the example in Figure 6, the specific number of RUs can be varied.

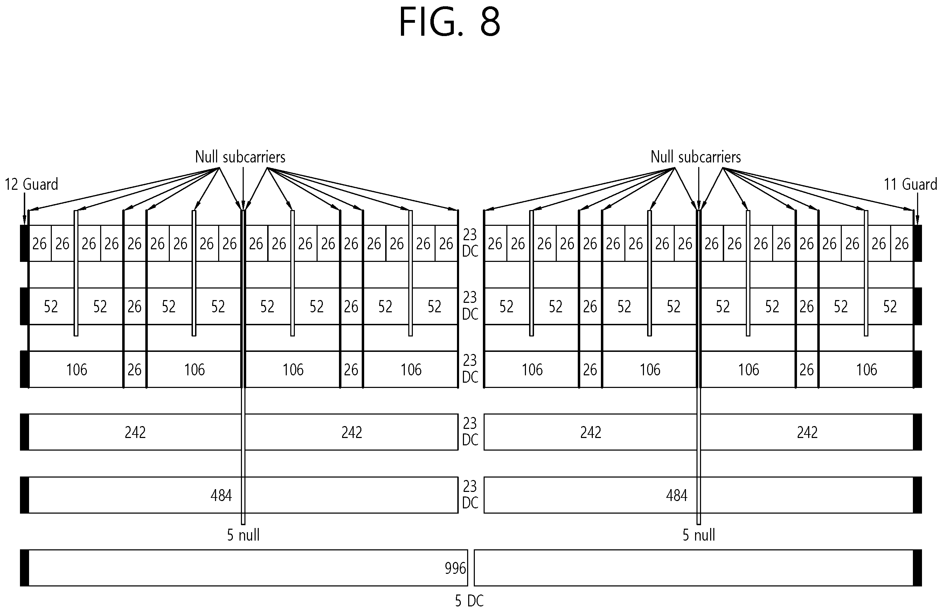

Figure 8 is a diagram illustrating the layout of resource units (RUs) used for an 80MHz PPDU. The arrangement of resource units (RUs) used in the present specification may vary. For example, the arrangement of resource units (RUs) used in the 80 MHz band may vary.

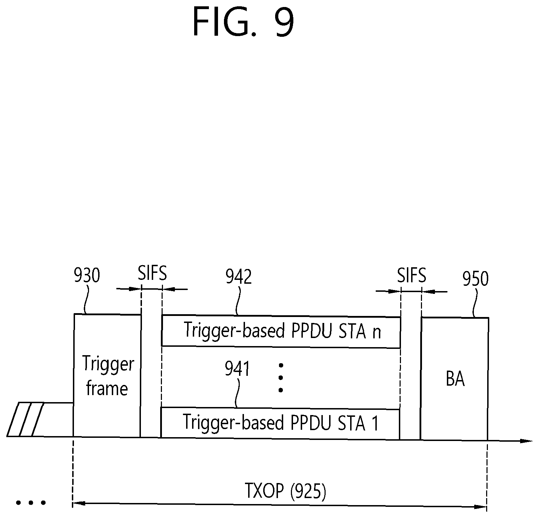

Figure 9 illustrates the operation according to UL-MU. As illustrated, a transmitting STA (e.g., an AP) may acquire a TXOP (925) by performing channel access through contending (e.g., backoff operation) and transmit a Trigger frame (930). That is, the transmitting STA (e.g., an AP) may transmit a PPDU including the Trigger frame (930). Upon receiving the PPDU including the Trigger frame, a TB (trigger-based) PPDU is transmitted after a delay equal to SIFS.

TB PPDUs (941, 942) are transmitted at the same time and may be transmitted from multiple STAs (e.g., user STAs) whose AIDs are indicated in the Trigger frame (930). The ACK frame (950) for the TB PPDU can be implemented in various forms. For example, the ACK frame (950) for the TB PPDU can be implemented in the form of a BA (block ACK).

In FIG. 9, transmission(s) of the Trigger Frame (930), TB PPDUs (941, 942), and/or the ACK frame (950) can be performed within the TXOP (925).

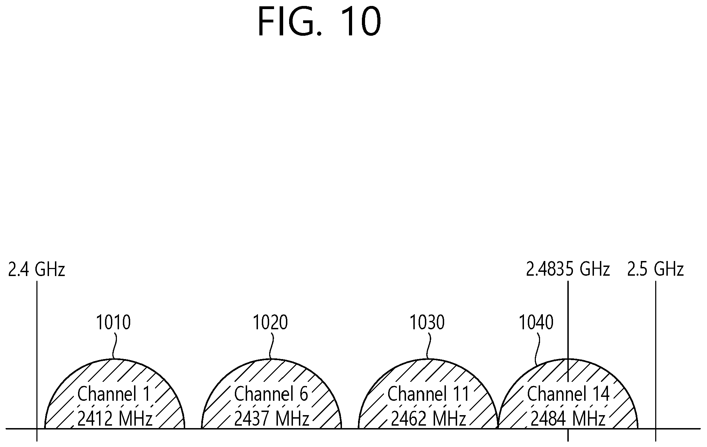

FIG. 10 illustrates an example of channels used/supported/defined within the 2.4 GHz band.

The 2.4 GHz band may also be referred to by other names, such as the first band (band). Furthermore, the 2.4 GHz band may refer to a frequency region in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz channel within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. Channel indices may be referred to by various names, such as channel numbers. The specific numerical values of the channel indices and center frequencies may vary.

Figure 10 illustrates four channels within the 2.4 GHz band. The illustrated first frequency region (1010) through fourth frequency region (1040) may each include one channel. For example, the first frequency domain (1010) may include channel 1 (a 20 MHz channel having an index of 1). At this time, the center frequency of channel 1 may be set to 2412 MHz. The second frequency domain (1020) may include channel 6. At this time, the center frequency of channel 6 may be set to 2437 MHz. The third frequency domain (1030) may include channel 11. At this time, the center frequency of channel 11 may be set to 2462 MHz. The fourth frequency domain (1040) may include channel 14. At this time, the center frequency of channel 14 may be set to 2484 MHz.

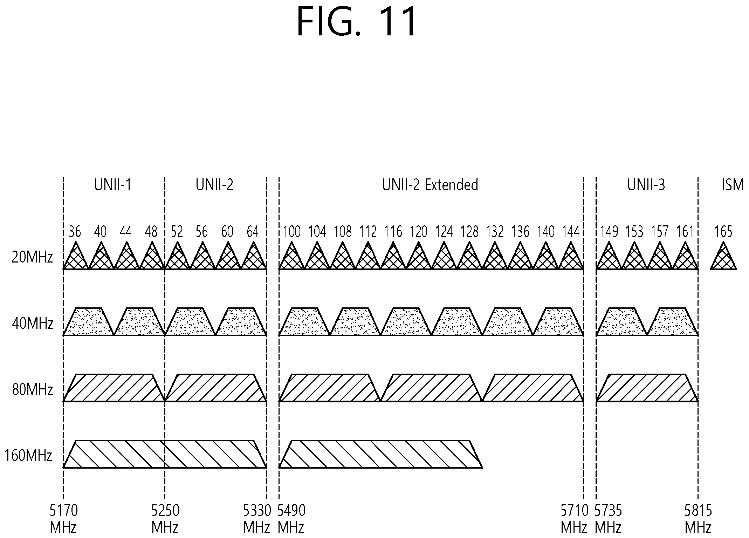

Figure 11 illustrates an example of channels used/supported/defined within the 5 GHz band.

The 5 GHz band may also be referred to as a second band, etc. The 5 GHz band may refer to a frequency region in which channels with a center frequency greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in Figure 11 are subject to change.

The multiple channels within the 5 GHz band include Unlicensed National Information Infrastructure (UNII)-1, UNII-2, UNII-3, and ISM. UNII-1 may be referred to as UNII Low. UNII-2 may include frequency regions called UNII Mid and UNII-2 Extended. UNII-3 may be referred to as UNII-Upper.

Multiple channels can be configured within the 5 GHz band, and the bandwidth of each channel can be variously configured, such as 20 MHz, 40 MHz, 80 MHz, or 160 MHz. For example, the 5170 MHz to 5330 MHz frequency region within UNII-1 and UNII-2 can be divided into eight 20 MHz channels. The 5170 MHz to 5330 MHz frequency region can be divided into four channels via a 40 MHz frequency band. The 5170 MHz to 5330 MHz frequency region can be divided into two channels via an 80 MHz frequency band. Alternatively, the 5170 MHz to 5330 MHz frequency region can be divided into one channel via a 160 MHz frequency band.

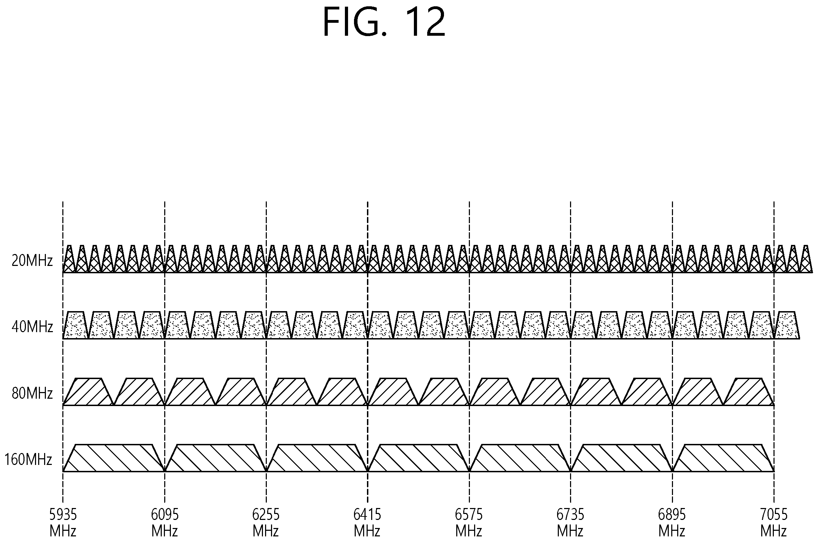

Figure 12 illustrates an example of channels used/supported/defined within the 6 GHz band.

The 6 GHz band may be referred to by other names, such as the third band/band. The 6 GHz band may refer to a frequency region where channels with a center frequency of 5.9 GHz or higher are used, supported, or defined. The specific values shown in Figure 12 may vary.

For example, the 20 MHz channel in Figure 12 may be defined starting from 5.940 GHz. Specifically, the leftmost channel among the 20 MHz channels in Figure 12 may have an index of 1 (or channel index, channel number, etc.) and may be assigned a center frequency of 5.945 GHz. In other words, the center frequency of channel index N may be determined as (5.940 + 0.005*N) GHz.

Accordingly, the indices (or channel numbers) of the 20 MHz channels in Figure 12 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Additionally, according to the aforementioned (5.940 + 0.005*N) GHz rule, the indices of the 40 MHz channels in Figure 12 can be 3, 11, 19, 27, 35, 43, 51, 59, 67, 75, 83, 91, 99, 107, 115, 123, 131, 139, 147, 155, 163, 171, 179, 187, 195, 203, 211, 219, and 227.

Hereinafter, the structure, type and/or sub-type of the MAC frame are described.

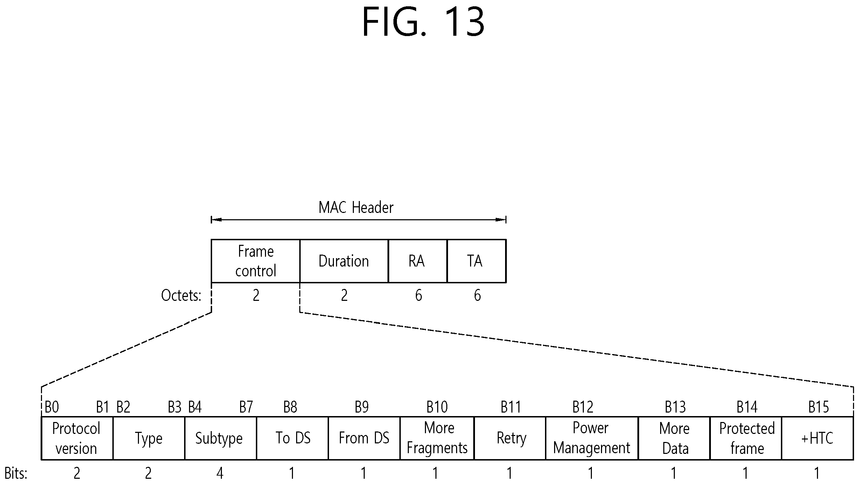

Figure 13 illustrates an example of a MAC frame header. As illustrated, the MAC frame may include a 2-octet frame control field/information, a 2-octet duration field/information, a 6-octet RA (Receiver Address) field/information, and a 6-octet TA (Transmitter Address) field/information. As illustrated in Figure 13, the four fields may be contiguous. The MAC header of Figure 13 may be modified in various ways, with new fields inserted between the four fields illustrated, or at least one of the fields illustrated may be omitted.

The MAC header illustrated in Figure 13 may be positioned at the very beginning of the MAC frame. That is, the MAC frame may include a MAC header as illustrated in Figure 13 and a MAC body field/information contiguous to the MAC header. The MAC frame including the MAC header of Figure 13 is inserted/included in the data field of the PPDU (e.g., UHR PPDU) illustrated in Figure 5.

The MAC frames included in the data field of the PPDU of the present specification can be classified into various types. For example, the MAC frames of the present specification can be classified into control frames, management frames, and data frames.

For example, the management frame includes the Association Request, Association Response, Reassociation Request, Reassociation Response, Probe Request, Probe Response, Beacon, Disassociation, Authentication, and Deauthentication frames/signals defined in conventional WLANs. For the management frame, the type fields (B3 and B2) in FIG. 13 are set to 00. Additionally, the values of the subtype fields (B7, B6, B5, B4) in Figure 13 are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) in Figure 13 are set to 01. Additionally, the values of the subtype fields (B7, B6, B5, B4) in FIG. 13 are as follows: Trigger (0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For the data frame, the values of the type fields (B3 and B2) in FIG. 13 are set to 10.

The MAC frames/signals used in the present specification can be identified through the type field/information and subtype field/information described above. For example, a "trigger frame" in the present specification may refer to a MAC frame in which the type bits B3 and B2 in the frame control field of the MAC header are set to 01, while the subtype bits B7, B6, B5, and B4 in the frame control field are set to 0010. The various MAC frames described in the present specification are inserted/included in the data fields of various PPDUs (e.g., HE/VHT/HE/EHT/UHR PPDUs).

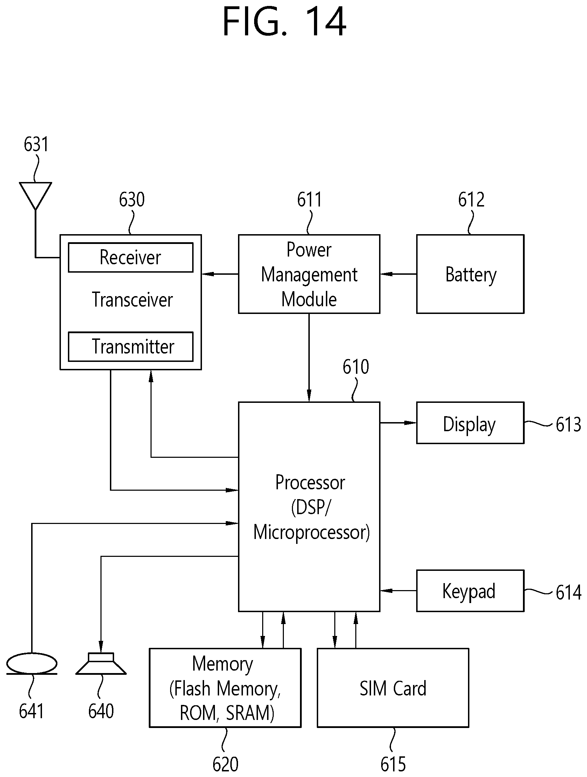

Figure 14 illustrates a modified example of a transmitting device and/or receiving device of the present specification.

The devices (e.g., AP STAs, non-AP STAs) illustrated in Figures 1 to 4 may be modified as illustrated in Figure 14. The transceiver (630) in Figure 14 may be identical to the transceivers (113, 123) in Figure 1. The transceiver (630) of FIG. 14 may include a receiver and a transmitter.

The processor (610) of FIG. 14 may be identical to the processors (111, 121) of FIG. 1. Alternatively, the processor (610) of FIG. 14 may be identical to the processing chip (114, 124) of FIG. 1.

The memory (150) of FIG. 14 may be identical to the memory (112, 122) of FIG. 1. Alternatively, the memory (150) of FIG. 14 may be a separate external memory different from the memory (112, 122) of FIG. 1.

Referring to FIG. 14, the power management module (611) manages power for the processor (610) and/or the transceiver (630). The battery (612) supplies power to the power management module (611). The display (613) outputs the results processed by the processor (610). The keypad (614) receives input to be used by the processor (610). The keypad (614) may be displayed on the display (613). The SIM card (615) may be an integrated circuit used to securely store an international mobile subscriber identity (IMSI) and associated keys, which are used to identify and authenticate subscribers in mobile devices such as mobile phones and computers.

Referring to FIG. 14, the speaker (640) may output sound-related results processed by the processor (610). The microphone (641) may receive sound-related input to be used by the processor (610).

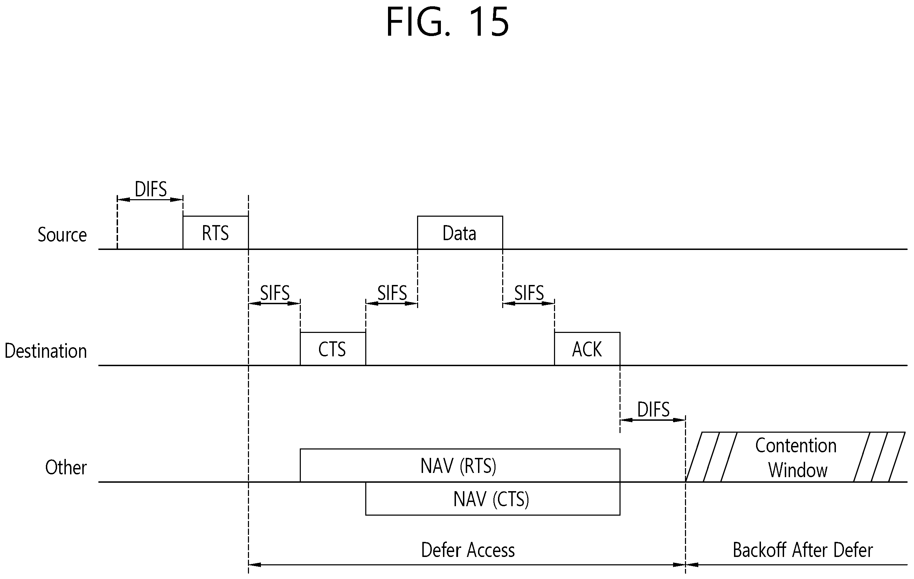

Figure 15 illustrates an example of NAV (network allocation vector) setting. The example of Figure 15 relates to the exchange of an RTS (Ready To Send) frame and a CTS (Clear To Send) frame. Figure 15 relates to an example in which a NAV is set based on the RTS/CTS exchange.

Referring to Figure 15, a Source STA transmits an RTS frame, and a Destination transmits a CTS frame. As described above, the destination STA designated as the receiver through the RTS frame does not set a NAV. Some of the remaining STAs may receive the RTS frame and set a NAV, and some others may receive the CTS frame and set a NAV.

If a CTS frame (e.g., PHY-RXSTART.indication primitive) is not received within a certain period from the time when the RTS frame is received (e.g., the time when the MAC receives a PHY-RXEND.indication primitive corresponding to the RTS frame), the STAs that set or updated a NAV through the RTS frame may reset (e.g., to 0) the NAV. The certain period may be (2*aSIFSTime + CTS_Time + aRxPHYStartDelay + 2*aSlotTime). The CTS_Time may be calculated based on the length and data rate of the CTS frame indicated by the RTS frame.

In Figure 15, although setting or updating a NAV through an RTS frame or a CTS frame is illustrated for convenience, the NAV setting/resetting/updating may be performed based on various other frames, for example, a duration field included in one PPDU based on a non-HT PPDU, an HT PPDU, a VHT PPDU, an HE PPDU, an EHT PPDU, and/or a UHR PPDU (e.g., a duration field in a MAC header of a MAC frame). For example, if an RA field in a received MAC frame does not match its own address (e.g., a MAC address), a STA may set/reset/update a NAV.

The Source STA of Figure 15 may be variously modified. For example, the Source STA of Figure 15 may be a non-AP STA or an AP. Additionally or alternatively, the Source STA of Figure 15 may be at least one non-AP STA included in a non-AP MLD, or at least one AP included in an AP MLD. Additionally or alternatively, the Source STA of Figure 15 may be various STAs such as STA 1, STA 2, AP 1, AP 2, and the like described below.

Hereinafter, a primary channel, a secondary channel, channel extension/bonding, and the like are described.

For example, in an IEEE 802.11n system, two 20 MHz channels may be combined to perform 40 MHz channel extension/bonding. In addition, in an IEEE 802.11ac system, 40/80/160 MHz channel extension/bonding may be performed.

For example, a STA may perform channel extension/bonding for a Primary 20 MHz channel (or a P20 channel) and a Secondary 20 MHz channel (an S20 channel). For channel extension/bonding, a backoff count/counter may be used. A backoff count value is selected as a random value and may be decreased during a backoff interval. In general, when the backoff count value becomes 0, a STA (e.g., a non-AP STA or an AP) may attempt to access the channel.

A STA performing channel extension/bonding determines, at a time when the P20 channel is determined to be in an Idle state during a backoff interval and the backoff count value for the P20 channel becomes 0, whether the S20 channel has maintained an Idle state for a certain period (e.g., a PIFS (point coordination function interframe space)). If the S20 channel is in an Idle state, the STA may perform bonding of the P20 channel and the S20 channel. That is, the STA may transmit a signal (e.g., a PPDU) through a 40 MHz channel including the P20 channel and the S20 channel (i.e., a 40 MHz bonding channel).

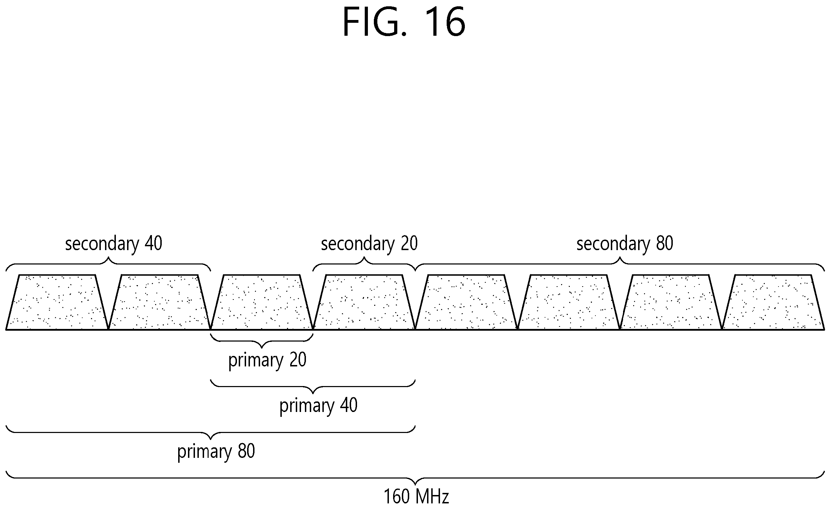

Figure 16 illustrates an example related to a primary channel, a secondary channel, and channel extension/bonding. As illustrated in Figure 16, a Primary 20 MHz channel and a Secondary 20 MHz channel may constitute a 40 MHz channel (a Primary 40 MHz channel) through channel extension/bonding. That is, the extended/bonded 40 MHz channel may include the Primary 20 MHz channel and the Secondary 20 MHz channel.

The positions of the channels illustrated in Figure 16 (e.g., the P20/S20/S40/S80 channels) on the frequency domain may be variously modified.

According to the conventional art, channel extension/bonding may be performed when a channel following the Primary channel is in an Idle state. That is, a Primary 20 MHz channel (or a P20 channel), a Secondary 20 MHz channel (or an S20 channel), a Secondary 40 MHz channel (or an S40 channel), and a Secondary 80 MHz channel (or an S40 channel) may be sequentially extended/bonded; if the Secondary 20 MHz channel (or the S20 channel) is determined to be in a Busy state, channel extension/bonding may not be performed even if all of the other Secondary channels are in an Idle state. In addition, when the Secondary 20 MHz channel (or the S20 channel) is in an Idle state and the Secondary 40 MHz channel is determined to be in a Busy state, channel extension/bonding may be performed only for the Primary 20 MHz channel (or the P20 channel) and the Secondary 20 MHz channel (or the S20 channel).

For example, in a wireless LAN system (e.g., an 802.11 system), Channel Access may be performed based on a Primary channel (e.g., a P20 channel). For example, as described above, when the Primary channel (e.g., the P20 channel) is IDLE and the Back-off counter (BC) becomes 0, a STA may transmit a frame (e.g., a 40 MHz PPDU) including an IDLE Secondary channel (e.g., an S20 channel). For this, it is preferable that all STAs perform CCA on the primary channel (e.g., the P20 channel).

Therefore, an AP may announce the Primary channel (e.g., the P20 channel) of the BSS. For example, information related to the Primary channel may always be included in a Management frame such as a Beacon or a Probe Response frame transmitted by the AP. Such a mechanism is effective for performing frame exchange between all STAs and the AP without interference (or for appropriate medium protection). However, when only the primary channel (e.g., the P20 channel) is BUSY and a surrounding secondary channel is IDLE, a STA may perform Access on the IDLE secondary channel. Accordingly, there is a technical feature that efficiency may be reduced from the viewpoint of medium use.

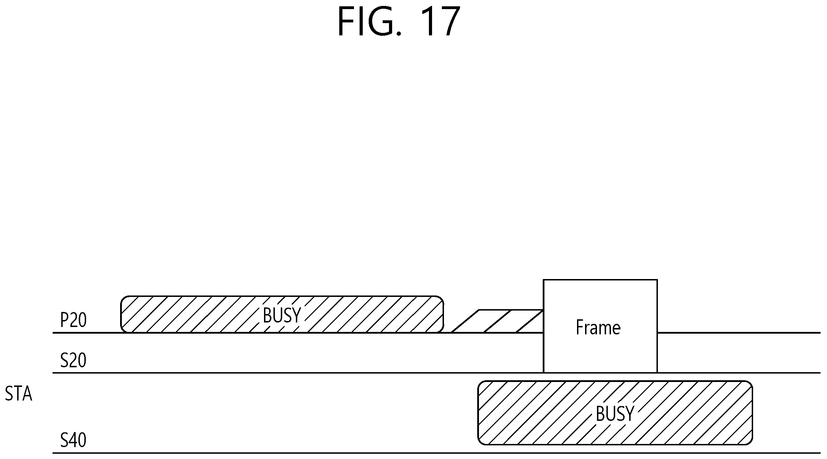

Figure 17 relates to an example of channel access related to an 80 MHz channel. For example, Figure 17 relates to channel access based on a Primary channel defined on a wireless medium having an 80 MHz Bandwidth. The three channels/subchannels illustrated in Figure 17 are indicated as P20, S20, S40, and the like, and the related terms may be described as follows.
P20: Primary 20MHz Channel
S20: Secondary 20MHz Channel
S40: Secondary 40MHz Channel
S80: Secondary 80MHz Channel
S160: Secondary 160MHz Channel

The above-described P20, S20, S40, S80, and S160 may correspond to the respective channels/subchannels illustrated in Figure 16.

For example, when a CCA result for the P20 (channel) is determined to be in a BUSY state, or when a NAV (described in Figure 15) is set for the P20 and it is determined to be in a BUSY state, the BC for the P20 is not decreased. In this case, the BC may not be decreased until the P20 becomes in an IDLE state. When the BC becomes 0 through such a Back-off process (e.g., a process of decreasing the BC), a STA may check the channel state of the S20 (channel) and the S40 (channel) (e.g., check based on a CCA technique). In addition, the corresponding STA may transmit a frame through the extended channel/resource according to the check result. In the example of Figure 17, since the S40 (channel) is BUSY, a frame corresponding to a 40 MHz PPDU is transmitted through the P20 and the S20. In other words, the example of Figure 17 relates to an example in which a 40 MHz channel including the P20 channel and the S20 channel is configured through the previously described channel extension/bonding.

As in the example of Figure 17, when the P20 is determined to be in a BUSY state and the S20 and the S40 are determined to be in an IDLE state, a STA operating according to the conventional Access technique wastes a Bandwidth corresponding to 60 MHz. Accordingly, the efficiency of medium use is reduced. An example of the present specification proposes various techniques/methods/apparatuses for improving this. For example, an example of the present specification proposes various techniques/methods/apparatuses in which access to a Secondary channel (or a Non-Primary Channel) is possible even when the P20 is BUSY.

It is preferable that the following various examples are applied to a STA of a wireless LAN system. For example, the following STA (or STA1 to STA#N, and the like) may be at least one non-AP STA (included in a non-AP MLD) or at least one AP (included in an AP MLD).

The present specification relates to an operation of performing Access to a Secondary Channel (e.g., S20). Access to the Secondary Channel may be expressed as SCA (Secondary Channel Access). When SCA is started/performed/triggered, a STA may switch to the Secondary Channel (e.g., S20) and thereafter perform CCA sensing (and/or decreasing of a Backoff counter) on the switched Secondary Channel.

The term SCA may be variously modified. For example, SCA may have the same meaning as NPCA (Non-Primary Channel Access). For example, in the following examples, the term SCA may be replaced with the term NPCA. For example, in the following examples, the expression SCA mode may be replaced with the expression NPCA mode. In addition, in the following examples, the term SCA enabled presence may be replaced with the term NPCA enabled presence.

Additionally or alternatively, the term Secondary Channel may be variously modified. For example, since the main operation related to SCA/NPCA is performed by a STA (e.g., an AP/non-AP STA) in the previously described Secondary 20 MHz channel, it may also be referred to by the name NPCA primary channel.

Hereinafter, information related to Capabilities for Secondary Channel Access is described.

For example, Capabilities for SCA (or NPCA) may be defined/exchanged/negotiated in advance. For example, a non-AP STA and an AP may inform each other of the defined/exchanged/negotiated information. For example, Capabilities for SCA (or NPCA) may be related to CCA capable of identifying a Wi-Fi frame performed on a Primary channel (e.g., the above-described P20 channel) (e.g., an operation based on conventional preamble detection (PD)). For example, as in the following specific example, Capabilities for SCA (or NPCA) may include information related to whether a frame can be decoded on an SCH (or an S20 channel or an NPCA primary channel). Through such Capabilities for SCA/NPCA, additional NAV(s) (e.g., at least one Intra-BSS NAV and/or Basic NAV) may be set even on the SCH (or the NPCA primary channel).

For example, Capabilities for SCA (or NPCA) may be configured based on 2-bit information. For example, the following Level 0/1/2 may be identified through the first/second/third values of the 2-bit information. The length of the 2-bit information may be variously modified. Accordingly, the 2-bit information may also be configured through 3/4/5 bits, and the like. The following Level 0/1/2 do not all have to be used, and at least one may be selectively used.

The three specific levels of the above-described Capabilities for SCA (or NPCA) are described as follows.

Level 0: For example, the Level 0 may mean "No Back-off on SCH." For example, when the level is set, conventional CCA may be performed (by a STA) on the SCH. In this case, CCA capable of detecting that it is a Wi-Fi signal (e.g., referred to as guard interval detection (GID)) and/or CCA detecting a signal of a certain strength or higher (e.g., referred to as energy detection (ED)), and the like, may be performed.

Level 1: For example, the Level 1 may mean "Back-off on a SCH at a time." For example, when the level is set, PD may be performed on only one secondary channel at a time.

Level 2: For example, the Level 2 may mean "Back-off on SCHs at the same time." For example, when the level is set, PD may be performed on a plurality of secondary channels at the same time.

For example, the above-described Capabilities may be included in a UHR capabilities IE, and the like, and may thus be included in various management frames such as a Beacon, a Probe Response frame, and a (Re)Association Request frame generated/transmitted by an AP. Additionally or alternatively, the above-described Capabilities may be included in various management frames such as a Probe Request frame and a (Re)Association Request frame generated/transmitted by a non-AP STA.

The NAV described in Figure 15 may be distinguished into an Intra-BSS NAV and a Basic NAV. The Intra-BSS NAV may be a NAV set by an Intra-BSS frame/PPDU, and the Basic NAV may be a NAV set by an OBSS (overlapping BSS) frame/PPDU.

For example, if an Intra-BSS NAV for the PCH is set by a STA (e.g., a non-AP STA or an AP), SCA (or NPCA) may not be performed. For example, when an AP exchanges frames with any one STA (e.g., a Non-AP STA) within a TXOP acquired by the AP, another STA may set an intra-BSS NAV based on the primary channel due to this. At this time, the STA that set the intra-BSS NAV may access the SCH and then transmit a frame to the AP, and in this case, if the corresponding AP was performing Tx (e.g., DL Data, Ack, and the like), the corresponding AP does not receive the related signal. Accordingly, it is preferable that a STA starts/triggers SCA only when a Basic NAV is set on the PCH.

The above technical feature may be expressed in various ways. For example, the above technical feature may also be expressed as that a STA (e.g., a non-AP STA or an AP) may perform SCA when a Basic NAV is set on the PCH.

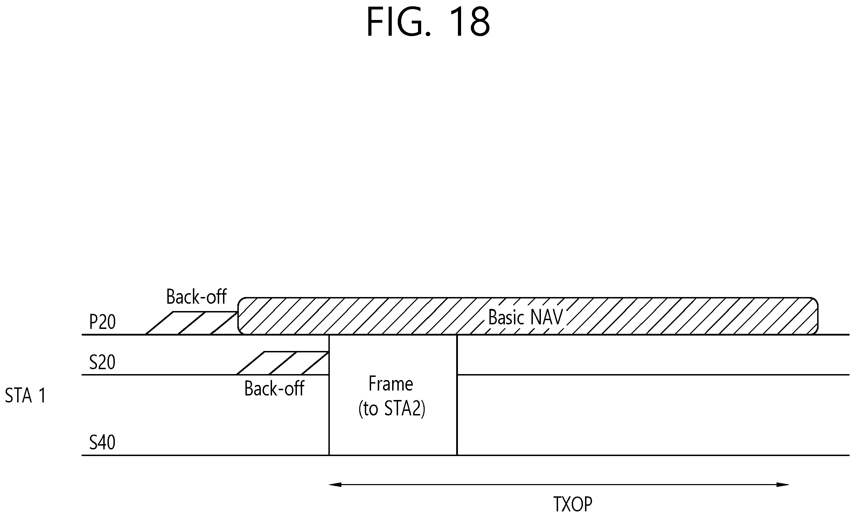

Figure 18 illustrates an example of an SCA process. The example of Figure 18 (e.g., an SCA/NPCA operation) may be performed by STA1 (e.g., an AP or a non-AP STA). As illustrated, if a Basic NAV is set while performing back-off on the P20 channel, Back-off may be performed on the S20 channel (or the NPCA primary channel) at the time when the corresponding Basic NAV is set. In this case, Back-off may be performed on the S20 channel (or the NPCA primary channel) not immediately after the time when the Basic NAV is set, but after a delay from the time when the Basic NAV is set. For example, a Switching delay for performing PD from the P20 channel to the S20 channel may occur. The above example differs in the CCA method from the viewpoint that CCA can be performed on the S20 channel, and may be performed at all levels. The reason why Back-off is performed on the S20 channel (or the NPCA primary channel) is that, if a surrounding STA having an Operation channel identical or similar to that of STA 1 is IDLE without performing Back-off, it may transmit a frame at the same time, and in this case, a collision may occur and rather result in channel waste.

SCA/NPCA may be performed based on the following technical features.

First, an example of setting a TXOP on a secondary channel (or an NPCA primary channel) is as follows.

For example, when a Basic NAV on the P20 channel expires, CCA may have to be performed on the P20 channel. Accordingly, it is preferable that the end time of a TXOP for a secondary channel (e.g., an S20 channel or an NPCA primary channel) is set to end before the time when the Basic NAV on the Primary channel (e.g., the P20 channel) expires.

Additionally or alternatively, if there is not enough time to set the TXOP of the secondary channel, a Frame may not be transmitted (on the secondary channel).

For example, if the end time of the TXOP of the secondary channel is set to end after the time when the Basic NAV (of the Primary channel) expires, a Legacy STA, and the like, may transmit a frame through the P20 channel, and thus a problem may occur in that STA1 of Figure 18 cannot receive it. In addition, if a TBTT is set in the middle of the Basic NAV, a problem may occur because STA1 of Figure 18 has to prepare to transmit a Beacon immediately after the Basic NAV.

Second, an example of transmitting a Frame on a secondary channel (e.g., at least one channel including an NPCA primary channel) is described.

Conventionally, only when the P20 channel was determined to be IDLE could Preamble Puncturing be performed according to the IDLE/BUSY determination of at least one SCH channel. For the SCA/NPCA of the present specification, since a situation in which the P20 channel is BUSY is considered, the rule for this can be changed as follows. For example, when the P20 channel is determined to be BUSY, the corresponding P20 channel is Punctured, and other SCH(s) that are BUSY based on the S20 channel may also be punctured, and as a result, a frame may be transmitted through IDLE SCH(s). For example, in the example of Figure 18, it is determined that all of the total of three 20 MHz channels included in the S20 channel and the S40 channel are IDLE. Accordingly, STA1 may transmit an 80 MHz PPDU (including a MAC Frame) while performing Preamble Puncturing on the P20 channel of the 80 MHz PPDU. That is, information indicating the puncturing of the P20 channel may be included in the U-SIG field, and the like, of the corresponding 80 MHz PPDU.

Hereinafter, various technical features related to the SCA/NPCA mode are described.

For example, when a STA (an AP or a non-AP STA) has capabilities for SCA/NPCA, if the corresponding STA must necessarily switch to the S20 channel (or the NPCA primary channel) to perform SCA/NPCA when a Basic NAV is set on the P20 channel, the following issue may occur.

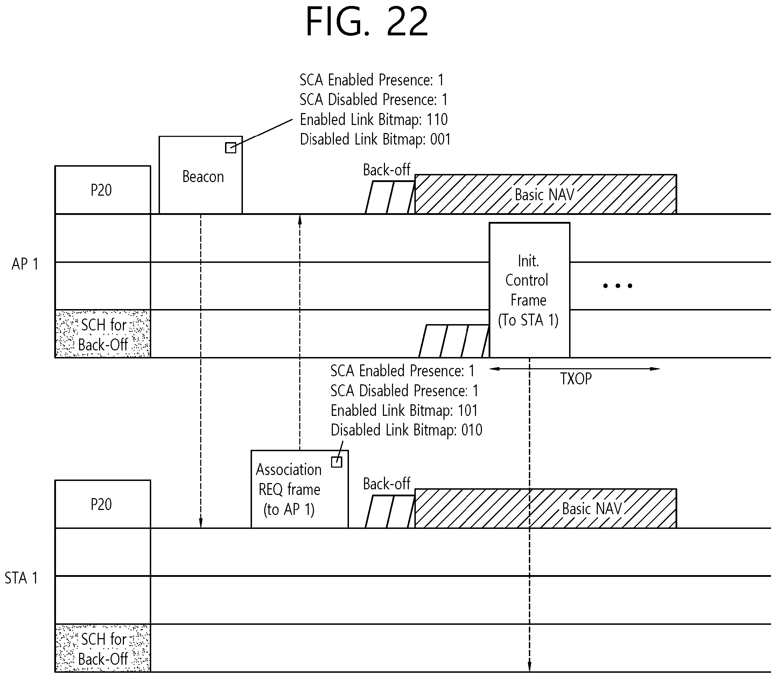

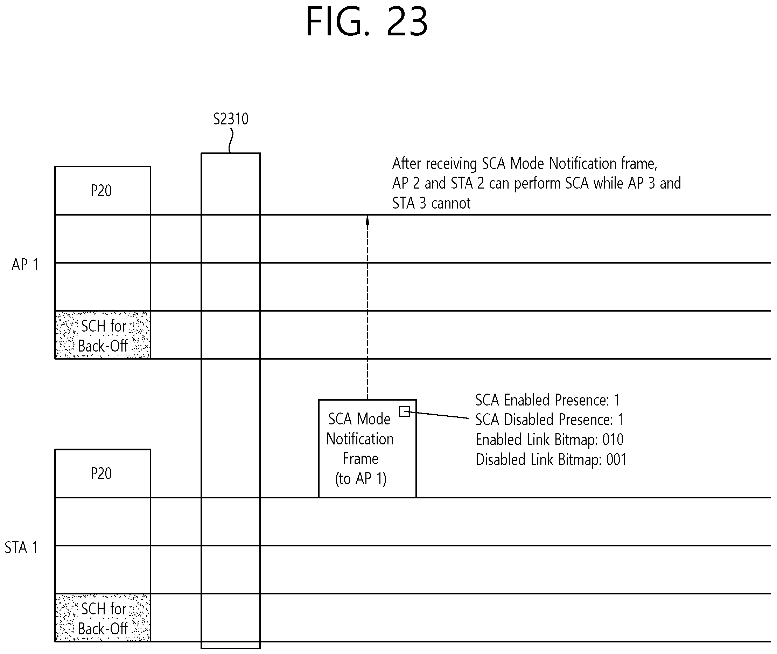

For example, when the BSS Operating channel of an AP (MLD) and the BSS Operating channels of neighboring APs (i.e., APs that are OBSS) overlap, they may affect each other during SCA/NPCA. Specifically, when one AP succeeds in SCA and uses all of the SCH, if the PCH of another AP overlaps, the channel access opportunity may be reduced. For example, when STA1 of Figure 18 is AP 1 of Figure 22 and/or Figure 23, since the S20 (channel) of AP 1 is the P20 (channel) of AP 2, AP 2 may not be able to use the P20, the S20, and the like. In this case, when AP 1 performs SCA, a problem may occur in that another AP 2 (not shown) does not have many opportunities for conventional PCH-based channel access. In addition, when one AP has capabilities for SCA, but another AP does not have capabilities for SCA, the time during which the AP having SCA capabilities occupies the channel may become long, and thus fairness may be reduced.

In addition, when all STAs associated with an AP having SCA capabilities (or NPCA capabilities) do not have SCA capabilities, the AP may perform SCA/NPCA. In this case, since successful frame exchange with all STAs is not possible, the AP may not need to perform SCA. Additionally or alternatively, when an AP does not have SCA capabilities, even if STAs associated with the AP have SCA capabilities, the STAs may not need to perform SCA. Additionally or alternatively, at least one STA may not want to perform SCA for power saving even if it has SCA capabilities. As described above, if the operation in which STAs switch to the S20 channel (or the NPCA primary channel) to perform SCA/NPCA when a Basic NAV is set on the PCH is defined as an optional function, it may be impossible for a STA and an AP to determine whether each other performs SCA when a Basic NAV is set. Due to this, normal frame exchange between the AP/STA may be impossible. Therefore, it is preferable that a STA having SCA capabilities (e.g., an AP and/or a STA) indicates whether to perform SCA/NPCA in consideration of the surrounding situation and its own intention. In addition, through such an indication, from the viewpoint of a STA, even if it has SCA capabilities, it may not perform SCA if it has a power saving purpose. Also, from the viewpoint of an AP, if it intends to ensure fairness for PCH-based transmission of an OBSS, it may not perform SCA.

For example, a STA (e.g., an AP and/or a non-AP STA) may include at least one of the following information for a Secondary Channel Access Operation. For example, the following information (e.g., information related to the Secondary Channel Access Capability, the Secondary Channel Access Mode, and/or the SCA Disabled Count described below) may be included in a (UHR) Operation IE or in the form of a new IE in a Management frame including a Beacon, a (Multi-link) Probe Response, and a (Re)Association Response of an AP. Additionally or alternatively, the following information may be included in a (UHR) Operation IE or in the form of a new IE in a Management frame including a (Multi-link) Probe Request and a (Re)Association Request of a non-AP STA. Additionally or alternatively, the following information may be delivered through a multi-link element or a Reduced Neighbor Report element of a Beacon frame. Additionally or alternatively, the following information may be delivered in a multi-link element of a Multi-link Probe Response frame.

### Secondary Channel Access (SCA) Capability

Hereinafter, information related to the Secondary Channel Access Capability is described. As described above, since the term Secondary Channel Access can be replaced with NPCA, the information may be referred to as an SCA capability field/information/subfield/bit, and the like, or by various names such as an NPCA capability field/information/subfield/bit, and the like.

The above-described SCA Capability field/information/subfield/bit includes information related to whether a STA (e.g., a UHR non-AP STA or a UHR AP) has a capability to perform SCA.

For example, the above-described information may have various bit lengths. For example, when it is configured based on 1 bit, a value of "1" (or a value of "0") may mean that the corresponding STA has an SCA capability, and a value of "0" (or a value of "1") may mean that the corresponding STA does not have an SCA capability.

### Secondary Channel Access (SCA) Mode:

Hereinafter, information related to the SCA mode is described. As described above, since the term Secondary Channel Access can be replaced with NPCA, the information may be referred to as an SCA mode field/information/subfield/bit, and the like, or by various names such as an NPCA mode field/information/subfield/bit, and the like.

It may indicate whether to switch to the SCH (or the NPCA primary channel) and perform SCA/NPCA when a Basic NAV is set on the PCH by a STA (e.g., a non-AP STA or an AP) whose SCA Capability field is set to 1, that is, a STA having an SCA capability.

For example, when the SCA mode information is configured based on 1 bit, a first value (e.g., a "1" value) means performing SCA, and a second value (e.g., a "0" value) may indicate not performing SCA. Additionally or alternatively, when the SCA mode is indicated by the first value, the SCA mode may be expressed as being enabled. Additionally or alternatively, when the SCA mode is indicated by the second value, the SCA mode may be expressed as being disabled.

Additionally or alternatively, a STA (e.g., a non-AP STA or an AP) whose SCA Capability is 1, that is, a STA equipped with/supporting an SCA Capability, may always indicate a value related to the SCA Mode information.

Example_1: A case where an AP whose SCA Capability is set to 1 announces by setting the SCA Mode to 0 is described as follows.

Example_1-1: A STA associated with the AP (e.g., at least one non-AP STA) may notify the AP of its own SCA Mode field according to its own intention. In this case, regardless of the SCA Mode, unnecessary SCA performance by the non-AP STA and the AP can be prevented by not switching to the SCH (in any case, a non-AP STA that set the SCA Mode to 1 knows that the AP did not switch even if it switches).

Example_1-2: A STA associated with the AP (e.g., at least one non-AP STA) may set its own SCA Mode field to 0, the same as the AP.

Example_1-2-1: A STA associated with the AP (e.g., at least one non-AP STA) may maintain the SCA Mode at 0 until the AP announces the SCA Mode as 1 again, and when the AP announces the SCA Mode as 1, it may return to the SCA Mode originally set by the non-AP STA.

Example_1-2-2: When the AP announces the SCA Mode as 1 again, all STAs (e.g., all non-AP STAs) may indicate their own SCA Mode through an SCA Mode Notification frame.

Example_2: A case where the AP whose SCA Capability is set to 1 announces by setting the corresponding field to 1 is described as follows.

Each STA (e.g., a non-AP STA) indicates by setting its own SCA Mode field to 0 or 1. The AP does not perform SCA with a STA (e.g., a non-AP STA) that set the SCA Mode to 0, and may perform frame exchange through SCA with a STA (e.g., a non-AP STA) that set the SCA Mode to 1.

Example_2-1: The AP may maintain its own SCA Mode but not switch to the SCH (or the NPCA primary channel). The reason is that it currently knows that all STAs (e.g., non-AP STAs) have set the SCA Mode to 0, and knows that there is no STA capable of performing SCA.

Example_2-2: If all STAs (e.g., all non-AP STAs) set the SCA Mode to 0, the AP may change its own SCA Mode to 0.

Example_2-2-1: When one or more STAs (e.g., non-AP STAs) update and indicate their own SCA Mode to 1, the AP may set its own SCA Mode to 1 again to perform SCA with the corresponding STAs.

Additionally or alternatively, without the above-described process of Example_1 in which the AP announces the SCA Mode, an AP having an SCA capability may always set the SCA Mode to enable. In this case, only a STA (e.g., a non-AP STA) indicates its own SCA Mode, and if there is an enabled STA (e.g., a non-AP STA), the AP can also perform SCA. In this case, if all STAs (e.g., non-AP STAs) are disabled, the AP may not perform SCA.

The AP may deliver the information described above by including it in a UHR Operation IE or in the form of a new IE in a Management frame including a Beacon, a Probe Response, and an Association Response.

Additionally or alternatively, in a Beacon, a Probe request/response, and an Association Request/Response, only the SCA Capability may be exchanged between the AP and a STA (e.g., a non-AP STA). In this case, a STA associated with the AP (e.g., a non-AP STA) and the AP may be initially connected with the SCA Mode in a disabled state by default. In this case, when it wants to change the SCA Mode, the AP or the STA (e.g., a non-AP STA) may transmit, to the AP or the STA (e.g., a non-AP STA), an SCA Mode Notification frame by setting the SCA Mode value to a first value (e.g., a first value corresponding to an enable mode).

Additionally or alternatively, in a Beacon, a Probe request/response, and an Association Request/Response, only the SCA Capability may be exchanged between the AP and a STA. In this case, a STA associated with the AP (e.g., a non-AP STA) and the AP may be initially connected with the SCA Mode in an enabled state by default. In this case, when it wants to change the SCA Mode, the AP or the STA (e.g., a non-AP STA) may transmit, to the AP or the STA (e.g., a non-AP STA), an SCA Mode Notification frame by setting the SCA Mode value to a second value (e.g., a second value corresponding to a disable mode).

For example, the AP may determine whether it does not perform SCA for a STA (e.g., a non-AP STA) that indicated the SCA Mode as a second value (e.g., a second value corresponding to a disable mode). In this case, the AP may not transmit a frame through SCA to the corresponding STA, and may transmit a frame to a STA that set the SCA Mode to a first value (e.g., a first value corresponding to an enable mode). For example, a STA (e.g., a non-AP STA) may include the corresponding information in the form of a new IE in a Management frame including the Probe Request and the (Re)Association Request of the STA.

Additionally or alternatively, an AP and a STA (e.g., a non-AP) that want to change their own SCA Mode after the Association process may change the SCA mode through an SCA Mode Notification frame as follows. For example, an AP may announce by setting the SCA Mode value to a first value (e.g., 1 corresponding to enable) through a beacon. In this case, a specific STA may include, in an Association Request frame, whether it does not perform SCA for the purpose of power saving (e.g., whether the SCA Mode = 0) and transmit it. In this case, the STA (e.g., a non-AP STA) does not perform SCA, and the AP that has determined this may not transmit a frame to the STA when performing SCA. Thereafter, when the STA (e.g., a non-AP STA) wants to perform SCA, it may transmit the changed/updated SCA Mode to the AP by setting the SCA Mode value to a first value (e.g., 1 corresponding to enable) in an SCA Mode Notification frame. In this case, since the AP is also enabled, the meaning that they will perform SCA with each other can be delivered.

For example, the SCA Mode Notification frame may be changed to various names. For example, various names such as an NDPCA mode Notification frame, a Mode Notification frame, and a Node update/change frame may be used.

### SCA Disabled Count:

Hereinafter, information related to the SCA Disabled Count is described. As described above, since the term Secondary Channel Access can be replaced with NPCA, the information may be referred to as an SCA Disabled Count field/information/subfield/bit, and the like, or by various names such as an NPCA Disabled Count field/information/subfield/bit, and the like.

When indicating not to perform SCA (e.g., when a value of 0 indicating a disable mode is set), the information related to the SCA Disabled Count may indicate that SCA will be enabled again after a TBTT designated in the corresponding field. For example, the corresponding field may be indicated only when the SCA Mode is set to 0.

Additionally or alternatively, the information related to the SCA Disabled Count may be indicated in units of us. Additionally or alternatively, the information related to the SCA Disabled Count may be indicated in units of TU. Additionally or alternatively, the information related to the SCA Disabled Count may be indicated based on a TSF.

For example, when the information related to the SCA Disabled Count is configured based on 8 bits, when the corresponding bit value is 0, it may mean that the SCA Mode will be maintained at 0 until it indicates its own enable/disable status through an SCA Mode Notification frame regardless of time. For example, when the corresponding bit value is 1, it may mean setting the SCA Mode value to 1 after 1 TBTT. Additionally or alternatively, a STA may set the value related to the SCA Disabled Count by reflecting interference due to in-device coexistence of non-WiFi STAs.

For example, a STA may determine whether there is interference due to traffic of a non-WiFi STA that is periodic (or aperiodic and lasting for a specific period) on the PCH. In this case, a STA (e.g., a non-AP STA or an AP) may switch to the SCH and perform SCA in a state where the PCH is unusable due to the corresponding interference. In addition, it may inform a surrounding STA (e.g., a non-AP STA or an AP) of unavailable time information on the PCH (start time / end time / period / duration) and/or information related to the Band/frequency resource/channel/subchannel where the interference occurs.

For example, the PCH may be unavailable for a mobile AP due to traffic of a non-WiFi STA. In this case, the corresponding mobile AP may broadcast unavailable time information and/or information related to the band/frequency resource/channel/subchannel where the interference occurs. In this case, a non-AP STA that has received this may switch to the SCH during the corresponding period and perform SCA with the mobile AP.

Based on such information, it may be determined that the band/frequency resource/channel/subchannel occupied by a non-WiFi STA is included in the SCA Channels set by the AP. For example, in this case, an AP whose SCA Mode was enabled may change its own SCA Mode to disabled, and may announce by setting a value reflecting the time during the period in which there is interference from a non-WiFi STA as the SCA Disabled Count value. A STA (e.g., a non-AP STA) that has received this may determine that, during the corresponding period, the AP is in a state in which frame transmission and reception is impossible due to the traffic of non-WiFi STAs without switching to the SCH. For example, from the viewpoint of a STA, it can prevent switching to an unnecessary SCH and performing Back-off.

Additionally or alternatively, in 11bn, a new Action frame (e.g., which may be referred to by various terms such as an SCA Mode Notification frame, and the like) may be defined. For example, after Association, the AP and a STA (e.g., a non-AP STA) may include the corresponding information in an SCA Mode Notification frame and transmit it.

The present specification proposes an example of providing the above-described various information related to SCA/NPCA at an MLD level. For example, the various information proposed in the present specification may be configured at an MLD-level, not at the level of one link (or one non-AP STA or AP).

A first method related to information configured at an MLD-level is as follows.

### First method

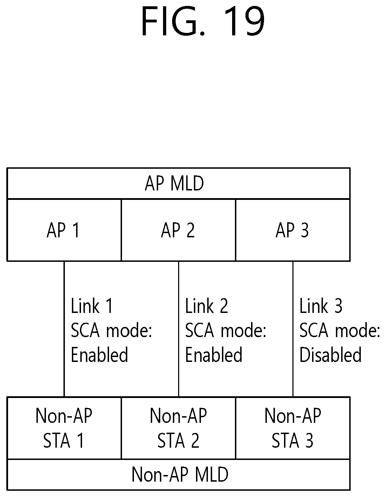

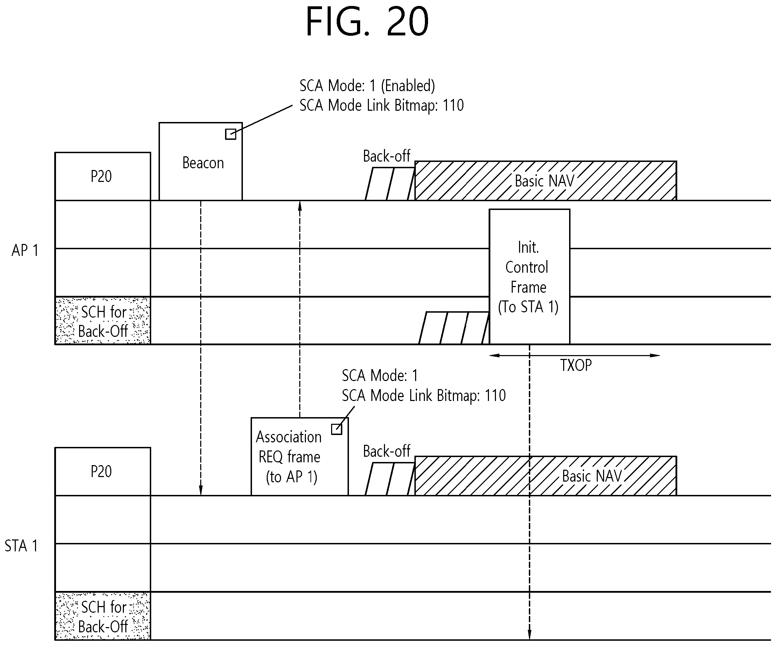

Figures 19 and 20 illustrate an example related to the first method. The first method relates to an SCA Mode Link Bitmap. For example, the SCA Mode Link Bitmap may have a length of up to 16 bits.

For example, an AP MLD and a Non-AP MLD may deliver information related to another link (e.g., at least one second link) through one link (e.g., at least one first link) through a Multi-link element. By utilizing this, through the corresponding bitmap and the SCA Mode subfield defined above, each AP affiliated with the AP MLD and each STA affiliated with the Non-AP MLD can enable or disable each link. For example, as in Figure 19, three links are connected between the AP MLD and the non-AP MLD, and the Link ID of the first link may be 0, the Link ID of the second link may be 1, and the Link ID of the third link may be 2. For example, in this case, if the AP MLD wants to enable the SCA Mode of the links for Link ID 0 and Link ID 1, the AP MLD sets the SCA Mode value to 1 in the Beacon and sets the bit at the position corresponding to the corresponding link to 1. In the example of Figure 19, the SCA Mode Link Bitmap may have a length of 3 bits. In the example of Figure 19, the corresponding bitmap may be set to 110. The Non-AP MLD that has received this may inform the AP MLD of information related to the SCA Mode for each affiliated STA (e.g., information related to enable or disable). In the corresponding manner, the operation for the SCA Mode described above can operate for each affiliated STA or each affiliated AP (based on per link). Through this, it can be confirmed that AP 1 and STA 1 illustrated in Figure 20 perform SCA when a Basic NAV is set on the PCH (e.g., the P20 channel illustrated in Figure 20).

Additionally or alternatively, the example of Figures 19 and 20 may be expressed differently as follows. An example of the present specification relates to an operation between a first MLD and a second MLD. For example, the example of the first MLD may be the AP MLD of Figure 19. The example of the second MLD may be the non-AP MLD of Figure 19. For example, the first MLD may perform a multi-link operation related to a plurality of links (e.g., Link 1, Link 2, Link 3, and the like illustrated in Figure 19). For example, the first MLD may include an affiliated STA, and the affiliated STA may be a plurality of STAs (e.g., AP 1, AP 2, AP 3 illustrated in Figure 19). For example, the second MLD may perform a multi-link operation related to a plurality of links (e.g., Link 1, Link 2, Link 3, and the like illustrated in Figure 19). For example, the second MLD may include an affiliated STA, and the affiliated STA may be a plurality of STAs (e.g., Non AP STA 1, Non-AP STA 2, Non-AP STA AP 3 illustrated in Figure 19). A first STA according to the present specification (e.g., AP 1 illustrated in Figure 20) may transmit a first management frame (e.g., the Beacon illustrated in Figure 20) to a second STA (e.g., STA 1 illustrated in Figure 20) based on a first link (e.g., Link 1 illustrated in Figure 19). For example, the first management frame (e.g., the Beacon illustrated in Figure 20) may include first bitmap information (e.g., the SCA Mode Link Bitmap illustrated in Figure 20) related to an NPCA mode performed by the first MLD for the plurality of links. For example, the first STA (e.g., AP1 illustrated in Figure 20) may receive a second management frame (e.g., the Association REQ frame illustrated in Figure 20) from the second STA (e.g., STA 1 illustrated in Figure 20) based on the first link (e.g., Link 1 illustrated in Figure 19). For example, the first bitmap information (e.g., the SCA Mode Link Bitmap illustrated in Figure 20) may have a length of 16 bits. For example, one bit of the first bitmap may indicate whether the first MLD performs NPCA on one link corresponding to the one bit. Accordingly, in the example of Figure 20, the 110 bitmap may indicate an enabled mode for the first link, indicate an enabled mode for the second link, and indicate a disabled mode for the third link. For example, the first management frame (e.g., the Beacon illustrated in Figure 20) may further include first NPCA mode information (e.g., SCA Mode: 1 (enabled) illustrated in Figure 20) related to the NPCA mode of the first STA (e.g., AP 1 illustrated in Figure 20). For example, the first NPCA mode information (e.g., SCA Mode: 1 (enabled) illustrated in Figure 20) may be set to a first value (e.g., "1" as illustrated in Figure 20) based on the NPCA mode of the first STA being enabled. For example, after the first management frame (e.g., the Beacon illustrated in Figure 20) and the second management frame (e.g., the Association REQ frame illustrated in Figure 20) are exchanged, NPCA/SCA by the first STA (e.g., AP 1 of Figure 20) may be performed. For example, the first STA performs switching to an NPCA primary channel (e.g., an S20 channel or the SCH for back-off of Figure 20) based on a Basic NAV for the Primary Channel of the first link being set. For example, the Basic NAV may be set by an OBSS PPDU received by the first STA (e.g., AP 1 of Figure 20). After the first STA performs the NPCA primary channel switching, the first STA may acquire a TXOP for the NPCA primary channel based on performing Back-off on the NPCA primary channel. For example, based on the acquired TXOP, the first STA may transmit a frame (e.g., the Control frame to STA 1 illustrated in Figure 20) to the second STA (e.g., STA 1 illustrated in Figure 20) based on the NPCA primary channel (and at least one SCH/NPCA channel based on channel extension).

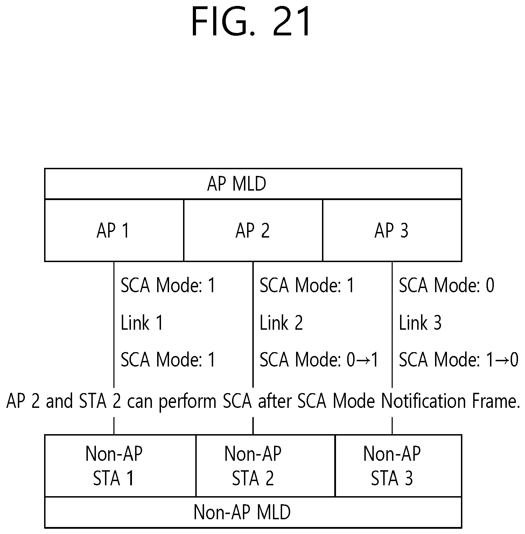

As illustrated in Figures 19 and 20, the above-described first method can indicate the same SCA Mode for multiple links. The method related to Figures 19 and 20 can be improved in various ways. For example, an additional second method for a case where the Non-AP MLD wants to change to disable for STA2 and wants to enable for STA3 is proposed through Figures 21 to 23. For example, a second method related to information configured at an MLD-level may be proposed.

Figures 21 to 23 illustrate an example related to the second method.

The second method described below may be performed based on the various information/bits/subfields/fields proposed below.

### SCA Enabled Presence (e.g., 1 bit)

Hereinafter, information related to the SCA Enabled Presence is described. As described above, since the term SCA can be replaced with NPCA, the information may be referred to as an SCA Enabled Presence field/information/subfield/bit, and the like, or by various names such as an NPCA Enabled Presence field/information/subfield/bit, and the like.

The information related to the SCA Enabled Presence may be configured with bits of various lengths, and may be configured, for example, as a field/information/subfield having a length of 1 bit. For example, if the corresponding value is set to a first value (or 1), it may mean the presence of an Enabled link bitmap field/information/subfield/bit described below. For example, the first value may indicate that the SCA Mode is enabled for a specific link according to the Enabled link bitmap described below. For example, if the corresponding value is set to a second value (or 0), it means that an Enabled link bitmap does not exist.

### SCA Disabled Presence (e.g., 1 bit)

Hereinafter, information related to the SCA Disabled Presence is described. As described above, since the term SCA can be replaced with NPCA, the information may be referred to as an SCA Disabled Presence field/information/subfield/bit, and the like, or by various names such as an NPCA Disabled Presence field/information/subfield/bit, and the like.

The information related to the SCA Disabled Presence may be configured with bits of various lengths, and may be configured, for example, as a field/information/subfield having a length of 1 bit. For example, if the corresponding value is set to a first value (or 1), it may mean the presence of a Disabled link bitmap field/information/subfield/bit described below. For example, the first value indicates the meaning that the SCA Mode is disabled for a specific link according to the Disabled link bitmap. For example, if the corresponding value is set to a second value (or 0), it means that a Disabled link bitmap does not exist.

### Enabled link bitmap (0 or 16 bits)

Hereinafter, information related to the Enabled link bitmap is described. The corresponding information may be referred to by various names such as an Enabled link bitmap field/information/subfield/bit, and the like.

For example, the information related to the Enabled link bitmap may have a bitmap of up to 16 bits in size only when the above-described SCA Enabled Presence value is set to a first value (or 1). Additionally or alternatively, the information related to the Enabled link bitmap may indicate a link for which the SCA Mode is enabled by setting the bit corresponding to each link to 1.

For example, as in the example of Figures 21 to 23, three links are connected between the AP MLD and the non-AP MLD, and the Link ID of the first link may be 0, the Link ID of the second link may be 1, and the Link ID of the third link may be 2. In such an example, if the SCA Mode of the links for Link ID 1 and Link ID 2 is to be enabled, the bit at the position corresponding to the corresponding link may be set to 1.

### Disabled link bitmap (0 or 16 bits)

Hereinafter, information related to the Disabled link bitmap is described. The corresponding information may be referred to by various names such as a Disabled link bitmap field/information/subfield/bit, and the like.

For example, the information related to the Disabled link bitmap may have a bitmap of up to 16 bits in size only when the above-described SCA Disabled Presence value is set to a first value (or 1). Additionally or alternatively, the information related to the Disabled link bitmap indicates a link whose SCA Mode is to be disabled by setting the bit corresponding to each link to 1.

For example, as in the example of Figures 21 to 23, three links are connected between the AP MLD and the non-AP MLD, and the Link ID of the first link may be 0, the Link ID of the second link may be 1, and the Link ID of the third link may be 2. In such an example, if the SCA Mode of the links for Link ID 1 and Link ID 2 is to be disabled, the bit at the position corresponding to the corresponding link is set to 1.

Hereinafter, the second method is described with reference to Figures 21 to 23. The operations of Figures 22 and 23 may be performed sequentially. That is, the operation of Figure 22 may be indicated as S2310 of Figure 23. As illustrated in Figure 21, AP 1 and AP 2 affiliated with the AP MLD are in an enabled state, and AP3 is in a disabled state. In addition, as illustrated, STA 1 and STA 3 affiliated with the Non-AP MLD are enabled, and STA 2 is disabled. Accordingly, when the corresponding channel (PCH) is determined to be busy by an OBSS PPDU set on the PCH, only AP 1 and STA 1 perform switching to the SCH (e.g., an S20 channel or an NPCA primary channel), and thereafter can perform SCA/NPCA. Thereafter, a case may occur in which the Non-AP MLD wants to enable Link 2 and disable Link 3. According to the above-described second method, the Non-AP MLD may set the SCA Enabled Presence value to 1 and the SCA Disabled Presence value to 1. In addition, the non-AP MLD may transmit an SCA Mode Notification frame by setting a bitmap of the link to be enabled and a bitmap of the link to be disabled. The AP MLD that has received the corresponding signal/frame can perform SCA with STA2 through Link 2. If the Non-AP MLD has no link to be disabled and wants to enable only Link 3, it may set the SCA Disabled Presence value to 0, and the Disabled Link Bitmap may have a length of 0 bits. The method illustrated in Figures 21 to 23 has the advantage that, compared to the method illustrated in Figures 19 and 20, it can individually set enable or disable for each link through one frame.

Additionally or alternatively, the example of Figures 21 to 23 may be expressed differently as follows. The example of Figures 21 to 23 is an improvement of the example of Figures 19 and 20, and the technical features of Figures 21 to 23 may operate together with the technical features of Figures 19 and 20. For example, an example of the present specification relates to an operation between a first MLD and a second MLD. For example, the example of the first MLD may be the AP MLD of Figure 21. The example of the second MLD may be the non-AP MLD of Figure 21. For example, the first MLD may perform a multi-link operation related to a plurality of links (e.g., Link 1, Link 2, Link 3, and the like illustrated in Figure 21). For example, the first MLD may include an affiliated STA, and the affiliated STA may be a plurality of STAs (e.g., AP 1, AP 2, AP 3 illustrated in Figure 21). For example, the second MLD may perform a multi-link operation related to a plurality of links (e.g., Link 1, Link 2, Link 3, and the like illustrated in Figure 21). For example, the second MLD may include an affiliated STA, and the affiliated STA may be a plurality of STAs (e.g., Non AP STA 1, Non-AP STA 2, Non-AP STA AP 3 illustrated in Figure 21). A first STA according to the present specification (e.g., AP 1 illustrated in Figure 23) may transmit a first management frame (e.g., the Beacon illustrated in Figure 22) to a second STA (e.g., STA 1 illustrated in Figure 22) based on a first link (e.g., Link 1 illustrated in Figure 21). For example, the first management frame (e.g., the Beacon illustrated in Figure 22) may include first bitmap information (e.g., the Enabled Link Bitmap illustrated in Figure 22) related to an NPCA mode performed by the first MLD for the plurality of links. For example, the first bitmap information may be an enable bitmap (e.g., the Enabled Link Bitmap illustrated in Figure 22). For example, the enable bitmap may have a length of 16 bits. For example, one bit of the enable bitmap may be set to a first value (e.g., "1") based on a mode of NPCA being enabled on a corresponding one link. Accordingly, in the example of Figure 22, a value of "110" may be set corresponding to the SCA/NPCA modes of the three links. For example, the first management frame (e.g., the Beacon of Figure 22) may further include enable presence information (e.g., the SCA Enabled Presence of Figure 22). For example, the enable presence information may have a length of 1 bit. For example, the value of the enable presence information may be set to a first value (e.g., "1") when at least one bit included in the enable bitmap (e.g., the Enabled Link Bitmap included in the Beacon of Figure 22) is set to the first value. For example, the first management frame (e.g., the Beacon of Figure 22) may further include a disable bitmap having a length of 16 bits (e.g., the Disabled Link Bitmap included in the Beacon of Figure 22). One bit of the disable bitmap may be set to a first value (e.g., "1") based on a mode of NPCA being disabled on a corresponding one link. Accordingly, in the example of Figure 22, a value of "001" may be set corresponding to the SCA/NPCA modes of the three links. For example, the first management frame (e.g., the Beacon of Figure 22) may further include disable presence information (e.g., the SCA Disabled Presence included in the Beacon of Figure 22). For example, the disable presence information may have a length of 1 bit. For example, the value of the disable presence information may be set to a first value (e.g., "1") when at least one bit included in the disable bitmap (e.g., the Disabled Link Bitmap included in the Beacon of Figure 22) is set to the first value.

Additionally or alternatively, the example of Figures 21 to 23 may be expressed differently as follows. For example, the first STA (e.g., AP1 illustrated in Figure 22) may receive a second management frame (e.g., the Association REQ frame illustrated in Figure 22) from the second STA (e.g., STA 1 illustrated in Figure 22) based on the first link (e.g., Link 1 illustrated in Figure 21). For example, the second bitmap information (e.g., the Enabled Link Bitmap included in the Association REQ of Figure 22) may have a length of 16 bits. For example, the second bitmap information may be an enable bitmap (e.g., the Enabled Link Bitmap included in the Association REQ of Figure 22). For example, the enable bitmap may have a length of 16 bits. For example, one bit of the enable bitmap may be set to a first value (e.g., "1") based on a mode of NPCA being enabled on a corresponding one link. Accordingly, in the example of Figure 22, a value of "101" may be set corresponding to the SCA/NPCA modes of the three links. For example, the first management frame (e.g., the Association REQ of Figure 22) may further include enable presence information (e.g., the SCA Enabled Presence included in the Association REQ of Figure 22). For example, the enable presence information may have a length of 1 bit. For example, the value of the enable presence information may be set to a first value (e.g., "1") when at least one bit included in the enable bitmap (e.g., the Enabled Link Bitmap included in the Association REQ of Figure 22) is set to the first value. For example, the second management frame (e.g., the Association REQ of Figure 22) may further include a disable bitmap having a length of 16 bits (e.g., the Disabled Link Bitmap included in the Association REQ of Figure 22). One bit of the disable bitmap may be set to a first value (e.g., "1") based on a mode of NPCA being disabled on a corresponding one link. Accordingly, in the example of Figure 22, a value of "010" may be set corresponding to the SCA/NPCA modes of the three links. For example, the second management frame (e.g., the Association REQ of Figure 22) may further include disable presence information (e.g., the SCA Disabled Presence included in the Association REQ of Figure 22). For example, the disable presence information may have a length of 1 bit. For example, the value of the disable presence information may be set to a first value (e.g., "1") when at least one bit included in the disable bitmap (e.g., the Association REQ Disabled Link Bitmap of Figure 22) is set to the first value.

Additionally or alternatively, the example of Figures 21 to 23 may be expressed differently as follows. For example, after the first management frame (e.g., the Beacon illustrated in Figure 22) and the second management frame (e.g., the Association REQ frame illustrated in Figure 22) are exchanged, NPCA/SCA by the first STA (e.g., AP 1 of Figure 22) may be performed. For example, the first STA performs switching to an NPCA primary channel (e.g., an S20 channel or the SCH for back-off of Figure 22) based on a Basic NAV for the Primary Channel of the first link being set. For example, the Basic NAV may be set by an OBSS PPDU received by the first STA (e.g., AP 1 of Figure 22). After the first STA performs the NPCA primary channel switching, the first STA may acquire a TXOP for the NPCA primary channel based on performing Back-off on the NPCA primary channel. For example, based on the acquired TXOP, the first STA may transmit a frame (e.g., the Control frame to STA 1 illustrated in Figure 22) to the second STA (e.g., STA 1 illustrated in Figure 22) based on the NPCA primary channel (and at least one SCH/NPCA channel based on channel extension).

Additionally or alternatively, the example of Figures 21 to 23 may be expressed differently as follows. For example, a second STA (e.g., AP 1 of Figures 22 and 23) may transmit a notification frame (e.g., the SCA Mode Notification frame illustrated in Figure 23) to a first STA (e.g., AP 1 of Figures 22 and 23). For example, the notification frame may include a disable bitmap (the Disabled Link Bitmap of Figure 23) and/or an enable bitmap (the Enabled Link Bitmap of Figure 23) changed/updated at the second STA. For example, the notification frame may include enable presence information (e.g., the SCA Enabled Presence of Figure 23) indicating that the disable bitmap exists. For example, the notification frame may include disable presence information (e.g., the SCA Disabled Presence of Figure 23) indicating that the enable bitmap exists. When the notification frame is delivered to the first STA, the first STA and the second STA can perform NPCA/SCA based on the exchanged notification frame (e.g., the SCA Mode Notification frame illustrated in Figure 23). For example, in the example of Figure 23, after the SCA Mode Notification frame is exchanged, it can be confirmed by the AP MLD and the non-AP MLD that NPCA/SCA is enabled for Link 2 and NPCA/SCA is disabled for Link 3. Accordingly, in the example of Figure 23, NPCA/SCA can be performed on link 2, and NPCA/SCA cannot be performed on link 3.

Hereinafter, a third method related to information configured at an MLD-level may be proposed.

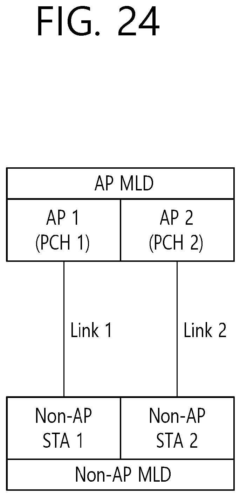

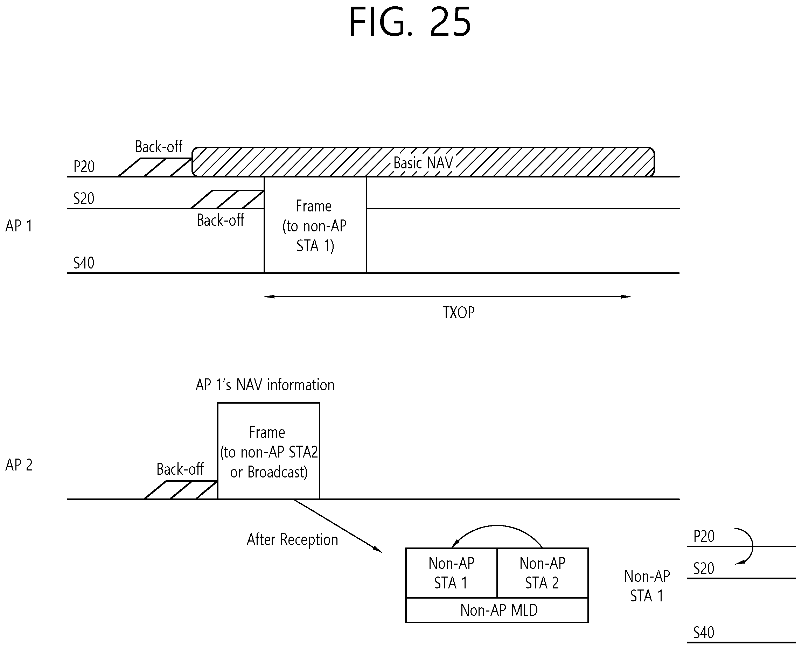

The third method described below relates to a technique of exchanging information related to channel switching between STA 1 and STA 2 at an MLD-level, for example, in the situation of Figure 18. In addition, the information related to channel switching related to the third method relates to the NAV sharing illustrated in Figures 24 and 25. Hereinafter, NAV sharing is first described, and thereafter a technique of exchanging information related to channel switching at an MLD-level according to the third method is described.

For example, in the example of Figure 18, STA 1 (e.g., an AP) and STA 2 (e.g., a non-AP STA) cannot accurately know each other whether a NAV (e.g., a Basic NAV) is set on the PCH. In other words, sharing NAV information with each other may be helpful for SCA/NPCA, but in general, it may be difficult to deliver information through a channel on which a NAV is set (e.g., a P20 channel). In consideration of this, a Multi-link operation may be utilized for NAV sharing. For example, in relation to NAV information, one or more pieces of information (at least one of information related to NAV information, Link ID, Channel Switch Indication, and/or Channel Switch Back Indication, described below) may be included as follows. The corresponding information may be transmitted using a Data frame by being included in an HE A-Control, and the like, or based on a separate Management frame.

Among the various information related to NAV sharing, the NAV Information is described as follows.

### NAV Information

The above-described information related to the NAV Information may indicate information related to the remaining NAV duration from the start time (or end time) of the frame through which the corresponding NAV information is delivered. The remaining NAV information indicated through the above-described NAV Information may be indicated based on the 2 octets of the Duration/ID field included in a conventional MAC header. Additionally or alternatively, the field size (of the corresponding NAV information) can be reduced by using granularity (8us, 32us, 128us, and the like) like the TXOP field of the PHY header. For example, 1 to 2 bits may indicate the Granularity, and the remaining 6 bits or more may be used to indicate the actual NAV duration information. Since the NAV duration indicated as above is information received on another link, the actual application may be determined based on the TSF of the link on which the NAV is set.

The above-described information related to the NAV information may be modified as follows. For example, through the NAV information, a time point at which the NAV ends rather than the NAV duration may be indicated. For example, the time point at which the NAV ends may be referred to as a NAV End Time, i.e., NAV_ET. Since the NAV_ET of one link must be informed on another link, and the AP of each link operates with each TSF, it is necessary to adjust the time. For example, when delivering the NAV_ET on one link, it may be delivered in consideration of the TSF of the Link corresponding to the NAV_ET. For example, if the TSF difference between the two links is 30, it is preferable to indicate through a drift of 30. However, if the NAV_ET gives information of about 8 octets corresponding to the TSF, it may have too large an overhead. Therefore, like a TWT, it can be configured with 2 octets by utilizing some bits of the TSF.

Among the various information related to NAV sharing, the Link ID is described as follows.

The corresponding Link ID may be the ID of the link on which the above-described NAV duration (e.g., the remaining NAV information indicated by the NAV information or information related to the NAV_ET) is set. The length of the Link ID may have 4 bits, or may have a length of 1/2/3 bits or a length of 5 or more bits.

Figures 24 and 25 are diagrams illustrating an operation related to NAV sharing.

For example, as illustrated in Figure 24, an AP MLD may include at least two APs (e.g., AP 1, AP 2), and a non-AP MLD may include at least two non-AP STAs (non-AP STA 1, non-AP STA 2).

Figures 24 and 25 illustrate an example of Basic NAV Sharing using an AP MLD. As illustrated, a Basic NAV may be set on the PCH (the illustrated PCH 1 or P20 channel) by AP 1. In this case, as illustrated in Figure 25, AP 2 may include NAV information for AP 1 (the illustrated AP 1's NAV information) in a frame and announce it individually to one STA, or announce it in a Broadcast form so that several STAs can recognize it. At this time, in the Non-AP MLD that has recognized this, NAV sharing is performed inside the MLD as illustrated in Figure 25. Specifically, as in Figure 25, when the NAV information for AP 1 (the illustrated AP 1's NAV information) is received by non-AP STA 2, the received information may be shared inside the non-AP MLD. Through this, non-AP STA 1 can acquire the received information (AP 1's NAV information). As a result, non-AP STA 1 can switch to the SCH because it can expect that the illustrated AP 1 will perform SCA, even if the current PCH (e.g., PCH 1 illustrated in Figure 24) is IDLE.

Additionally or alternatively, the present specification may propose information related to Channel Switch Indication and information related to Channel Switch Back Indication.

### Channel Switch Indication

The information may be information/field/subfield/bit informing that switching to the SCH (or an S20 channel, or an NPCA primary channel) has been made. For example, the information related to the Channel Switch Indication may have a length of 1 bit.

### Channel Switch Back Indication:

The information may be information/field/subfield/bit informing that switching to the PCH (or a P20 channel) has been made. For example, the information related to the Channel Switch Back Indication may have a length of 1 bit.

For example, a Basic NAV may be set on the PCH (e.g., a P20 channel or PCH 1) of non-AP STA 1 illustrated in Figure 25. In this case, non-AP STA 2 may include, in a frame to be transmitted to AP 2, information related to whether a Basic NAV is set on the PCH (e.g., a P20 channel or PCH 1) by non-AP STA 1 and it has switched to the SCH (e.g., an S20 channel or an NPCA primary channel) (e.g., setting the Channel Switch Indication to a first value (e.g., 1)). When AP 2 of Figure 25 receives the corresponding frame, the related information is shared internally within the AP MLD, and as a result, AP 1 included in the corresponding AP MLD can recognize/confirm the channel switching of non-AP STA 1. For example, AP 1 may determine that the channel on which non-AP STA 1 has switched to the SCH and is performing Back-off is not aligned with the channel of AP 1. Accordingly, AP 1 may transmit a frame to STAs other than non-AP STA 1. Through this, it is possible to prevent the AP from performing unnecessary frame exchange (i.e., frame exchange that will not succeed) with STA1, thereby preventing the CW value of the AP from increasing unnecessarily.

Additionally or alternatively, it may inform AP 1 (or the AP MLD) that non-AP STA 1 has switched back to the PCH by setting the Channel Switch Back Indication value to a first value (e.g., 1). Additionally or alternatively, the Channel Switch Indication information may be delivered together with the information related to the above-described NAV information. Through this, the AP that has received the corresponding information can acquire information related to when non-AP STA 1 switches back to the PCH again.

Various examples including the above-described first method, second method, and third method may be represented by a procedure flowchart.

Figure 26 is a procedure flowchart illustrating the above-described example of the present specification. Figure 26 may relate to a transmission process of a STA. The operation of Figure 26 may be an operation performed in a first STA (e.g., an AP). According to step S2610, a first STA (e.g., an AP) having an SCA Capability may set its own SCA Mode to a first value or a second value, and perform announcing. According to step S2620, the first STA may receive a response to the SCA mode it transmitted from at least one second STA (e.g., a non-AP STA). According to step S2630, when the SCA mode of all of the second STAs (e.g., all non-AP STAs) is set to a second value (e.g., 0), even if the PCH is determined to be busy due to an OBSS PPDU, the first STA may not perform switching to the SCH. According to step S2640, when the SCA mode of at least one second STA is set to a first value (e.g., 1), if the PCH is determined to be busy due to an OBSS PPDU, the first STA performs switching to the SCH and can perform SCA with the at least one second STA.

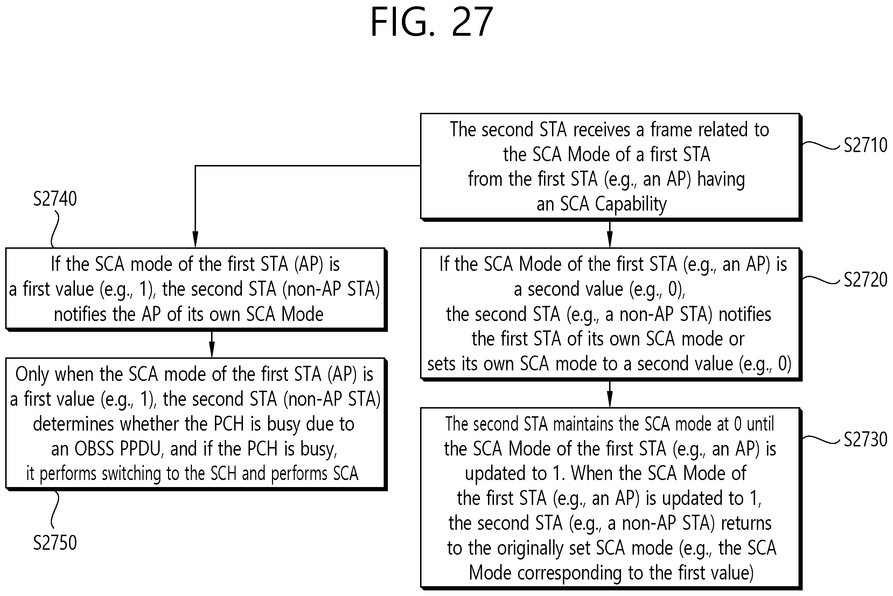

Figure 27 is a procedure flowchart illustrating the above-described example of the present specification. Figure 27 may relate to a reception process of a STA. The operation of Figure 27 may be an operation performed in a second STA (e.g., a non-AP STA). According to step S2710, the second STA may receive a frame related to the SCA Mode of a first STA from the first STA (e.g., an AP) having an SCA Capability. According to step S2720, if the SCA Mode of the first STA (e.g., an AP) is a second value (e.g., 0), the second STA (e.g., a non-AP STA) may notify the first STA of its own SCA mode or set its own SCA mode to a second value (e.g.,). According to step S2730, the second STA may maintain the SCA mode at 0 until the SCA Mode of the first STA (e.g., an AP) is updated to 1. According to step S2740, when the SCA Mode of the first STA (e.g., an AP) is updated to 1, the second STA (e.g., a non-AP STA) may return to the originally set SCA mode (e.g., the SCA Mode corresponding to the first value). According to step S2740, if the SCA mode of the first STA (AP) is a first value (e.g., 1), the second STA (non-AP STA) may notify the AP of its own SCA Mode. According to step S2750, only when the SCA mode of the first STA (AP) is a first value (e.g., 1), the second STA (non-AP STA) determines whether the PCH is Busy due to an OBSS PPDU, and if the PCH is busy, it can perform switching to the SCH and perform SCA.

Various examples including the first method, the second method, and the third method according to an example of the present specification may be modified in various ways. The various examples of the present specification may operate according to the following technical features.

A STA (e.g., an AP or a non-AP STA) performing the SCA/NPCA of the present specification can transmit a frame/PPDU on the SCH even during the time when a NAV (e.g., a Basic NAV) is set on the PCH. For example, a STA (e.g., an AP or a non-AP STA) may acquire an IDLE state determined through a backoff performed on one or more SCHs (e.g., an S20 channel or an NPCA primary Channel) (and a CCA result of one or more SCHs on which a backoff is not performed). Through this, the STA can transmit a frame/PPDU (excluding/puncturing the PCH) through at least one SCH.

Additionally or alternatively, a TXOP starting with frame/PPDU transmission on the SCH (e.g., an S20 channel or an NPCA primary Channel) may be set to end before the time when the NAV on the PCH ends. The TXOP length may be set/indicated through the duration/ID field of the corresponding frame. For example, the value of the duration/ID field may be set to a value of the time (including the interframe space (IFS)) required for the frame/PPDU exchange following the corresponding frame/PPDU.

Additionally or alternatively, the EDCA Parameter Set for each SCH on which Back-off is performed may be set to the EDCA Parameter Set on the PCH, the MU EDCA Parameter Set, or a new EDCA Parameter Set. This EDCA Parameter Set may be applied identically or individually (or differently) to all SCHs.

In the present specification, a STA (e.g., an AP or a non-AP STA) that receives a frame transmitted through SCA/NPCA can perform frame detection on the SCH (e.g., an S20 channel or an NPCA primary Channel) even during the time when a NAV (e.g., a Basic NAV) is set on the PCH. For example, a STA (e.g., an AP or a non-AP STA) may perform a backoff on the SCH because it has a frame to transmit, or even when it has no frame to transmit, it may attempt to receive whether there is a frame addressed to itself on the SCA. In addition, the STA may perform NAV setting/resetting based on the value of the duration/ID field of the frame detected on the SCH.

Additionally or alternatively, the EDCA Parameter Set for each SCH on which Back-off is performed may be set to the EDCA Parameter Set on the PCH, the MU EDCA Parameter Set, or a new EDCA Parameter Set. This EDCA Parameter Set may be applied identically or individually (or differently) to all SCHs.

Additionally or alternatively, a STA and an AP having SCA capabilities can confirm whether a STA or an AP performs SCA by including, in a Management frame (e.g., a Beacon, a Probe Request/Response frame, an SCA Mode Request/Response frame, and the like), an indication of whether to perform SCA when a Basic NAV is set on the PCH.

Additionally or alternatively, when the SCA Mode is disabled (the SCA Allowed is set to 0), an indication of until when the SCA Mode is to be disabled may be informed through an SCA Disabled count field.

Additionally or alternatively, an AP MLD or a Non-AP MLD can indicate whether to enable/disable the SCA Mode for each link through an SCA Mode Link Bitmap.

Additionally or alternatively, through an Enabled link bitmap, a Disabled link Bitmap, an SCA Enabled Presence, and an SCA Disabled Presence, it is possible to individually indicate whether to disable/enable for multiple links through one frame.

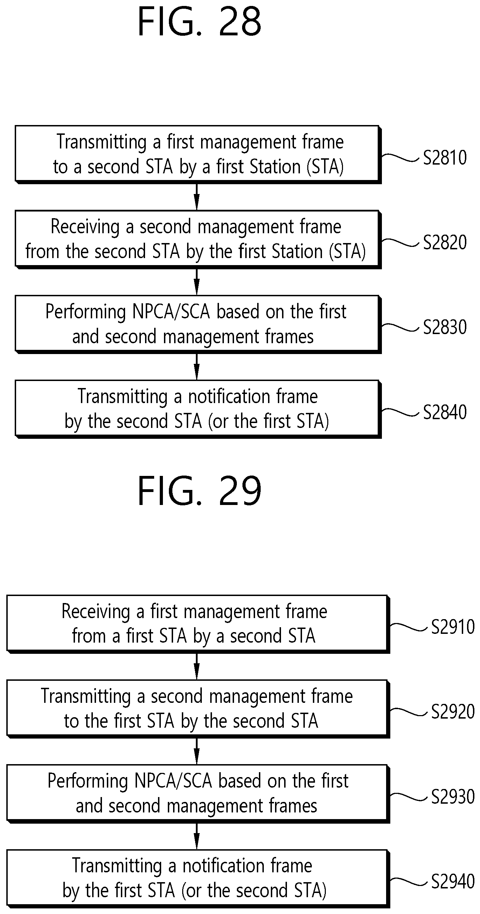

Figure 28 is a procedure flowchart illustrating an example of the present specification. The example of Figure 28 is described as being performed by a first STA for convenience of description. However, the example of the present specification may also be performed by an MLD. That is, each step of Figure 28 may be expressed as being performed by the first STA, or may be expressed as being performed by a first MLD affiliated with the first STA.

Step S2810 relates to, as illustrated, a step of transmitting a first management frame to a second STA by a first STA (Station). For example, the first management frame may be transmitted through a first link. For example, the first STA may be an AP or a non-AP STA. For example, the first STA may be any one of a plurality of APs affiliated with an AP MLD. For example, the first STA may be any one of a plurality of non-AP STAs affiliated with a non-AP STA MLD. For example, the first STA may be AP 1 illustrated in any one of Figures 19 to 25, or STA 1 (or non-AP STA 1) illustrated in any one of Figures 19 to 25. For example, the second STA may be STA 1 (or non-AP STA 1) illustrated in any one of Figures 19 to 25, or AP 1 illustrated in any one of Figures 19 to 25.

For example, the first management frame may include first bitmap information related to an NPCA (Non-Primary Channel Access) mode performed by the first MLD for the plurality of links. For example, the first management frame may be the Beacon illustrated in Figure 20 or Figure 22. For example, the first bitmap information related to the NPCA (Non-Primary Channel Access) mode may be the SCA Mode Link bitmap illustrated in Figure 20.

Additionally or alternatively, the first management frame may further include NPCA capability information related to whether the first STA has a capability related to NPCA. For example, the NPCA capability information may be information related to the above-described Secondary Channel Access Capability. For example, the NPCA capability information may have a length of 1 bit.

Additionally or alternatively, the first management frame may further include first NPCA mode information related to the NPCA mode of the first STA. For example, the first NPCA mode information may be the SCA Mode information included in the Beacon illustrated in Figure 20. For example, the first NPCA mode information may be set to a first value based on the NPCA mode of the first STA being enabled. For example, the first NPCA mode information may be set to a second value based on the NPCA mode of the first STA being disabled.

Additionally or alternatively, the first management frame may further include an enable bitmap. For example, the enable bitmap may be the Enabled Link Bitmap included in the Beacon of Figure 22. Additionally or alternatively, the first management frame may further include enable presence information. For example, the enable presence information may be 1-bit information indicating whether the enable bitmap exists. For example, the enable presence information may be the SCA Enabled presence information included in the Beacon of Figure 22.

Additionally or alternatively, the first management frame may further include a disable bitmap. For example, the disable bitmap may be the Disabled Link Bitmap included in the Beacon of Figure 22. Additionally or alternatively, the first management frame may further include disable presence information. For example, the disable presence information may be 1-bit information indicating whether the disable bitmap exists. For example, the disable presence information may be the SCA Disabled presence information included in the Beacon of Figure 22.

Additionally or alternatively, the first management frame may further include first information related to whether another STA affiliated with the first MLD has switched to an NPCA primary channel. For example, the first information may be the above-described Channel Switch Indication information.

Additionally or alternatively, it may further include second information related to whether another STA affiliated with the first MLD has switched from an NPCA primary channel to a primary channel. For example, the second information may be the above-described Channel Switch Back Indication information.

Step S2820 relates to, as illustrated, a step of receiving a second management frame from the second STA by the first STA (Station). For example, the second management frame may be received through the first link.

Additionally or alternatively, the second management frame may further include NPCA capability information related to whether the second STA has a capability related to NPCA. For example, the NPCA capability information may be information related to the above-described Secondary Channel Access Capability. For example, the NPCA capability information may have a length of 1 bit.

Additionally or alternatively, the second management frame may further include second NPCA mode information related to the NPCA mode of the second STA. For example, the second NPCA mode information may be the SCA Mode information included in the Association REQ illustrated in Figure 20. For example, the second NPCA mode information may be set to a first value based on the NPCA mode of the second STA being enabled. For example, the second NPCA mode information may be set to a second value based on the NPCA mode of the second STA being disabled.

Additionally or alternatively, the second management frame may further include an enable bitmap. For example, the enable bitmap may be the Enabled Link Bitmap included in the Association REQ of Figure 22. Additionally or alternatively, the second management frame may further include enable presence information. For example, the enable presence information may be 1-bit information indicating whether the enable bitmap exists. For example, the enable presence information may be the SCA Enabled presence information included in the Association REQ of Figure 22.

Additionally or alternatively, the second management frame may further include a disable bitmap. For example, the disable bitmap may be the Disabled Link Bitmap included in the Association REQ of Figure 22. Additionally or alternatively, the second management frame may further include disable presence information. For example, the disable presence information may be 1-bit information indicating whether the disable bitmap exists. For example, the disable presence information may be the SCA Disabled presence information included in the Association REQ of Figure 22.

Based on the illustrated step S2830, NPCA/SCA may be performed based on the first and second management frames. For example, the first STA performs switching to an NPCA primary channel (e.g., an S20 channel or the SCH for back-off of Figure 22) based on a Basic NAV for the Primary Channel of the first link being set. For example, the Basic NAV may be set by an OBSS PPDU received by the first STA (e.g., AP 1 of Figure 22). After the first STA performs the NPCA primary channel switching, the first STA may acquire a TXOP for the NPCA primary channel based on performing Back-off on the NPCA primary channel. For example, based on the acquired TXOP, the first STA may transmit a frame (e.g., the Control frame to STA 1 illustrated in Figure 22) to the second STA (e.g., STA 1 illustrated in Figure 22) based on the NPCA primary channel (and at least one SCH/NPCA channel based on channel extension). Step S2830 is not an essential step, and the performance of the operation may be omitted. Alternatively, it is also possible that step S2830 is performed after step S2840 described below is performed.

Based on the illustrated step S2840, a second STA (e.g., AP 1 of Figures 22 and 23) may transmit a notification frame (e.g., the SCA Mode Notification frame illustrated in Figure 23) to a first STA (e.g., AP 1 of Figures 22 and 23). For example, the notification frame may include a disable bitmap (the Disabled Link Bitmap of Figure 23) and/or an enable bitmap (the Enabled Link Bitmap of Figure 23) changed/updated at the second STA. For example, the notification frame may include enable presence information (e.g., the SCA Enabled Presence of Figure 23) indicating that the disable bitmap exists. For example, the notification frame may include disable presence information (e.g., the SCA Disabled Presence of Figure 23) indicating that the enable bitmap exists. When the notification frame is delivered to the first STA, the first STA and the second STA can perform NPCA/SCA based on the exchanged notification frame (e.g., the SCA Mode Notification frame illustrated in Figure 23).

Additionally or alternatively, step S2840 may be performed by the first STA, not by the second STA. Specifically, the notification frame may include a disable bitmap and/or an enable bitmap changed/updated at the first STA. For example, the notification frame may be generated by the first STA and transmitted to the second STA. Step S2840 is not an essential step, and the performance of the operation may be omitted.

Figure 29 is a procedure flowchart illustrating an example of the present specification. The example of Figure 29 is described as being performed by a second STA for convenience of description. However, the example of the present specification may also be performed by an MLD. That is, each step of Figure 29 may be expressed as being performed by the second STA, or may be expressed as being performed by a second MLD affiliated with the second STA.

Step S2910 relates to, as illustrated, a step of receiving a first management frame from a first STA (Station) by a second STA. For example, the technical features applied to the first management frame of step S2910 may be the same as those of step S2810. Accordingly, redundant description is omitted.

Step S2920 relates to, as illustrated, a step of transmitting a second management frame to the first STA (Station) by the second STA. For example, the technical features applied to the second management frame of step S2920 may be the same as those of step S2820. Accordingly, redundant description is omitted.

Based on the illustrated step S2930, NPCA/SCA may be performed based on the first and second management frames. For example, the technical features of step S2930 may be the same as those of step S2830. Accordingly, redundant description is omitted.

Based on the illustrated step S2940, the first STA or the second STA may transmit the above-described notification frame (e.g., the SCA Mode Notification frame illustrated in Figure 23). The notification frame of step S2940 may be the same as that of step S2930 described above. Accordingly, redundant description is omitted.

The technical features of the present specification may be performed by various devices. The device of the present specification may be the device described in Figure 1/Figure 14. The device of the present specification may include at least one processor; and at least one computer memory that is operably connectable to the at least one processor and stores instructions that perform operations based on being executed by the at least one processor.

For example, the processor may be the processor described in Figure 1 and/or Figure 14. That is, as described above, the processor of the present specification may include at least one of a DSP (digital signal processor), a CPU (central processing unit), a GPU (graphics processing unit), and a Modem (modulator and demodulator). The processor includes not only computers with various architectures such as single/multiple processor architectures and sequential (Von Neumann)/parallel architectures, but also specialized circuits such as FPGAs, ASICs, signal processing devices, and other devices. For example, the processor of the present specification may be a SNAPDRAGON^{®} series processor manufactured by Qualcomm^{®}, an EXYNOS^{®} series processor manufactured by Samsung^{®}, an A series processor manufactured by Apple^{®}, a HELIO^{®} series processor manufactured by MediaTek^{®}, an ATOM^{®} series processor manufactured by INTEL^{®}, or a processor that enhances these.

For example, the instructions may refer to computer program instructions executed by the at least one processor. The (computer program) instructions provide logic and/or routines that allow the technical features of the present specification to be performed by the processor. The at least one processor may load and execute a computer program by reading the at least one memory.

The computer program(s) defined by the instructions may arrive at the device (e.g., a STA) of the present specification through an appropriate delivery mechanism. The delivery mechanism may be, for example, a computer-readable storage medium, a computer program product, a memory device, a recording medium such as a CD-ROM or DVD, or an article of manufacture that tangibly embodies the computer program. The delivery mechanism may be a signal configured to reliably transmit a computer program through a wireless or electrical connection.

The (computer program) instructions may include software or firmware for a programmable processor (e.g., programmable content of a hardware device whether instructions for a processor, or configuration settings for a fixed-function device, gate array or programmable logic device, and the like).

For example, the memory may be the memory described in Figure 1 and/or Figure 14. That is, as described above, the memory of the present specification may store control information related to the operation of the STA of the present specification or information related to signals (e.g., a PPDU including management/control/data frames) transmitted and received by the corresponding STA.

The technical features of the present specification may also be implemented as at least one computer readable medium (CRM). The CRM includes instructions based on being executed by the above-described at least one processor. The instructions stored in the CRM may be the above-described computer program instructions.

The device of the present specification may further include a transceiver. The transceiver may be operably connectable to the memory/processor, and the like. The transceiver may be the transceiver illustrated in Figure 1 and/or Figure 14.

The above-described technical features of the present specification are applicable to various applications or business models. For example, the above-described technical features may be applied for wireless communication in a device that supports artificial intelligence (AI).

Artificial intelligence refers to the field of studying artificial intelligence or methodologies that can create it, and machine learning refers to the field of defining various problems dealt with in the field of artificial intelligence and studying methodologies to solve them. Machine learning is also defined as an algorithm that improves the performance of a certain task through steady experience with the task.

An artificial neural network (ANN) is a model used in machine learning, and may refer to an overall model having problem-solving ability, which is composed of artificial neurons (nodes) that form a network through the combination of synapses. An artificial neural network may be defined by a connection pattern between neurons of different layers, a learning process of updating model parameters, and an activation function that generates an output value.

An artificial neural network may include an Input Layer, an Output Layer, and optionally one or more Hidden Layers. Each layer includes one or more neurons, and an artificial neural network may include synapses connecting neurons to neurons. In an artificial neural network, each neuron may output the function value of an activation function for input signals, weights, and a bias input through synapses.

Model parameters refer to parameters determined through learning, and include the weights of synaptic connections and the biases of neurons. And, hyperparameters refer to parameters that must be set before learning in a machine learning algorithm, and include a Learning Rate, the number of iterations, a mini-batch size, an initialization function, and the like.

The purpose of learning of an artificial neural network can be seen as determining model parameters that minimize a loss function. The loss function can be used as an index for determining optimal model parameters in the learning process of an artificial neural network.

Machine learning can be classified into Supervised Learning, Unsupervised Learning, and Reinforcement Learning according to the learning method.

Supervised learning refers to a method of training an artificial neural network in a state where a label for the learning data is given, and a label may refer to the correct answer (or result value) that the artificial neural network must infer when the learning data is input to the artificial neural network. Unsupervised learning may refer to a method of training an artificial neural network in a state where a label for the learning data is not given. Reinforcement learning may refer to a learning method of training an agent defined in a certain environment to select an action or an action sequence that maximizes the cumulative reward in each state.

Among artificial neural networks, machine learning implemented as a deep neural network (DNN) including a plurality of hidden layers is also referred to as deep learning, and deep learning is a part of machine learning. Hereinafter, machine learning is used in a sense that includes deep learning.

In addition, the above-described technical features may be applied to wireless communication of a robot.

A robot may refer to a machine that automatically processes or operates a given task by its own ability. In particular, a robot having a function of recognizing the environment, determining by itself, and performing an operation may be referred to as an intelligent robot.

Robots can be classified into industrial, medical, household, military, and the like, according to the purpose or field of use. A robot may include a driving unit including an actuator or a motor to perform various physical operations such as moving robot joints. In addition, a movable robot includes a wheel, a brake, a propeller, and the like, in the driving unit, and can travel on the ground or fly in the air through the driving unit.

In addition, the above-described technical features may be applied to a device that supports extended reality.

Extended reality collectively refers to Virtual Reality (VR), Augmented Reality (AR), and Mixed Reality (MR). VR technology provides objects or backgrounds of the real world only as CG images, AR technology provides virtually created CG images together on top of real object images, and MR technology is a computer graphics technology that mixes and combines virtual objects in the real world to provide them.

MR technology is similar to AR technology in that it shows real objects and virtual objects together. However, there is a difference in that, in AR technology, virtual objects are used in a form that complements real objects, whereas in MR technology, virtual objects and real objects are used with equal characteristics.

XR technology can be applied to a HMD (Head-Mount Display), a HUD (Head-Up Display), a mobile phone, a tablet PC, a laptop, a desktop, a TV, a digital signage, and the like, and a device to which XR technology is applied may be referred to as an XR Device.

## Claims

1. A method performed in a wireless local area network (WLAN) system, the method comprising:
transmitting, by a first station (STA) and based on a first link, a first management frame to a second STA,
wherein the first STA is affiliated with a first Multi-Link Device (MLD) performing a multi-link operation related to a plurality of links, and the second STA is affiliated with a second MLD performing a multi-link operation related to the plurality of links,
wherein the first management frame includes first bitmap information related to a Non-Primary Channel Access (NPCA) mode performed by the first MLD for the plurality of links; and
receiving, by the first STA and based on the first link, a second management frame from the second STA,
wherein the second management frame includes second bitmap information related to an NPCA mode performed by the second MLD for the plurality of links.

2. The method of claim 1, wherein the first bitmap information is configured based on a first bitmap having a length of 16 bits, wherein one bit of the first bitmap indicates whether the first MLD performs NPCA on one link corresponding to the one bit.

3. The method of claim 1, wherein the first management frame further includes NPCA capability information related to whether the first STA has a capability related to NPCA,
wherein the NPCA capability information has a length of 1 bit.

4. The method of claim 1, wherein the first management frame further includes first NPCA mode information related to the NPCA mode of the first STA,
wherein the first NPCA mode information is set to a first value based on the NPCA mode of the first STA being enabled.

5. The method of claim 1, wherein the first management frame further includes enable presence information,
wherein the enable presence information has a length of 1 bit,
wherein the first bitmap information is an enable bitmap,
wherein the enable bitmap has a length of 16 bits,
wherein one bit of the enable bitmap is set to a first value based on a mode of NPCA being enabled on one link corresponding to the one bit,
wherein a value of the enable presence information is determined based on whether at least one bit included in the enable bitmap is set to the first value.

6. The method of claim 5, wherein the first management frame further includes disable presence information,
wherein the disable presence information has a length of 1 bit,
wherein the first management frame further includes a disable bitmap having a length of 16 bits,
wherein one bit of the disable bitmap is set to a first value based on a mode of NPCA being disabled on one link corresponding to the one bit included in the disable bitmap,
wherein a value of the disable presence information is determined based on whether at least one bit included in the disable bitmap is set to the first value.

7. The method of claim 1, wherein the first management frame further includes first information related to whether another STA affiliated with the first MLD has switched to an NPCA primary channel,
wherein the first information has a length of 1 bit.

8. The method of claim 1, wherein the first management frame further includes second information related to whether another STA affiliated with the first MLD has switched from an NPCA primary channel to a primary channel,
wherein the second information has a length of 1 bit.

9. The method of claim 1, wherein the first MLD is an access point (AP) MLD, and the first STA is a first AP,
wherein the second MLD is a non-AP STA MLD, and the second STA is a first non-AP STA.

10. The method of claim 1, wherein the first management frame is at least one of a beacon frame, an association response frame, and a probe response frame.

11. A first station (STA), comprising:
at least one processor; and
at least one computer memory operatively connected to the at least one processor and storing instructions that, based on being executed by the at least one processor, perform operations comprising:
transmitting, by the first STA and based on a first link, a first management frame to a second STA,
wherein the first STA is affiliated with a first Multi-Link Device (MLD) performing a multi-link operation related to a plurality of links, and the second STA is affiliated with a second MLD performing a multi-link operation related to the plurality of links,
wherein the first management frame includes first bitmap information related to a Non-Primary Channel Access (NPCA) mode performed by the first MLD for the plurality of links; and
receiving, by the first STA and based on the first link, a second management frame from the second STA,
wherein the second management frame includes second bitmap information related to an NPCA mode performed by the second MLD for the plurality of links.

12. The first STA of claim 11, wherein the instructions of the at least one computer memory perform operations related to any one of claims 2 to 10.

13. A method performed in a wireless local area network (WLAN) system, the method comprising:
receiving, by a second station (STA) and based on a first link, a first management frame from a first STA,
wherein the first STA is affiliated with a first Multi-Link Device (MLD) performing a multi-link operation related to a plurality of links, and the second STA is affiliated with a second MLD performing a multi-link operation related to the plurality of links,
wherein the first management frame includes first bitmap information related to a Non-Primary Channel Access (NPCA) mode performed by the first MLD for the plurality of links; and
transmitting, by the second STA and based on the first link, a second management frame to the first STA,
wherein the second management frame includes second bitmap information related to an NPCA mode performed by the second MLD for the plurality of links.

14. The method of claim 13, wherein the second STA performs operations related to any one of claims 2 to 10.

15. A second station (STA), comprising:
at least one processor; and
at least one computer memory operatively connected to the at least one processor and storing instructions that, based on being executed by the at least one processor, perform operations comprising:
receiving, by the second STA and based on a first link, a first management frame from a first STA,
wherein the first STA is affiliated with a first Multi-Link Device (MLD) performing a multi-link operation related to a plurality of links, and the second STA is affiliated with a second MLD performing a multi-link operation related to the plurality of links,
wherein the first management frame includes first bitmap information related to a Non-Primary Channel Access (NPCA) mode performed by the first MLD for the plurality of links; and
transmitting, by the second STA and based on the first link, a second management frame to the first STA,
wherein the second management frame includes second bitmap information related to an NPCA mode performed by the second MLD for the plurality of links.

16. The second STA of claim 15, wherein the second STA performs operations related to any one of claims 2 to 10.

17. At least one computer readable medium (CRM) storing instructions that, based on being executed by at least one processor, perform operations comprising:
transmitting, by a first station (STA) and based on a first link, a first management frame to a second STA,
wherein the first STA is affiliated with a first Multi-Link Device (MLD) performing a multi-link operation related to a plurality of links, and the second STA is affiliated with a second MLD performing a multi-link operation related to the plurality of links,
wherein the first management frame includes first bitmap information related to a Non-Primary Channel Access (NPCA) mode performed by the first MLD for the plurality of links; and
receiving, by the first STA and based on the first link, a second management frame from the second STA,
wherein the second management frame includes second bitmap information related to an NPCA mode performed by the second MLD for the plurality of links.
